(19)

Europäisches
Patentamt
European
Patent Office
Office européen
des brevets

(11) **EP 4 339 832 A1**

(12) **EUROPEAN PATENT APPLICATION**
published in accordance with Art. 153(4) EPC

(43) Date of publication:
**20.03.2024 Bulletin 2024/12**

(21) Application number: **21943948.6**

(22) Date of filing: **29.12.2021**

(51) International Patent Classification (IPC):
***G06K 9/62*** *(2022.01)*

(52) Cooperative Patent Classification (CPC):
**G06F 18/00**

(86) International application number:
**PCT/CN2021/142269**

(87) International publication number:
**WO 2022/252596 (08.12.2022 Gazette 2022/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.05.2021 CN 202110602479
24.08.2021 CN 202110977566**

(71) Applicant: **Huawei Cloud Computing
Technologies Co., Ltd.
Guizhou 550025 (CN)**

(72) Inventors:
• **TIAN, Qi
Shenzhen, Guangdong 518129 (CN)**

• **CHANG, Jianlong
Shenzhen, Guangdong 518129 (CN)**
• **ZHANG, Hengheng
Shenzhen, Guangdong 518129 (CN)**
• **JIANG, Nana
Shenzhen, Guangdong 518129 (CN)**
• **WEI, Longhui
Shenzhen, Guangdong 518129 (CN)**
• **ZHANG, Xiaopeng
Shenzhen, Guangdong 518129 (CN)**
• **XIE, Lingxi
Shenzhen, Guangdong 518129 (CN)**

(74) Representative: **Gill Jennings & Every LLP
The Broadgate Tower
20 Primrose Street
London EC2A 2ES (GB)**

(54) **METHOD FOR CONSTRUCTING AI INTEGRATED MODEL, AND INFERENCE METHOD AND APPARATUS OF AI INTEGRATED MODEL**

(57) A method for constructing an artificial intelligence (AI) integrated model is provided, including: obtaining a training dataset, an initial graph network model, and a plurality of base models; then iteratively training the initial graph network model by using training data in the training dataset and the plurality of base models, to obtain a graph network model; and then constructing the AI integrated model based on the graph network model and the plurality of base models, where an input of the graph network model is a graph structure consisting of outputs of the plurality of base models. Since the graph network model considers neighboring nodes of each node in the graph structure when processing the graph structure, the graph network model fully considers differences and correlations between the base models when fusing the outputs of the plurality of base models. Therefore, when a feature obtained based on the plurality of base models and the graph network model in the AI integrated model is used for processing an AI task, precision of an execution result of the AI task can be improved.

FIG. 4

EP 4 339 832 A1

**Description**

This application claims priority to Chinese Patent Application No. 202110602479.6, filed with the China National Intellectual Property Administration on May 31, 2021 and entitled "GRAPH NETWORK-BASED ARTIFICIAL INTELLIGENCE BIG MODEL CONSTRUCTION METHOD", and to Chinese Patent Application No. 202110977566.X, filed with the China National Intellectual Property Administration on August 24, 2021 and entitled "METHOD FOR CONSTRUCTING AI INTEGRATED MODEL, AND AI INTEGRATED MODEL INFERENCE METHOD AND APPARATUS", which are incorporated herein by reference in their entirety.

**TECHNICAL FIELD**

This application relates to the field of artificial intelligence (artificial intelligence, AI) technologies, and in particular, to a method for constructing an AI integrated model, an AI integrated model inference method, an AI integrated model management system, an inference apparatus, a computing device cluster, a computer-readable storage medium, and a computer program product.

**BACKGROUND**

With continuous development of AI technologies, especially deep learning technologies, a scale of an AI model is continuously increasing. For example, structures of many AI models gradually become deeper and wider, and a quantity of parameters of an AI model gradually increases. Currently, some AI models can mine data from massive data based on their large scale and a large quantity of computing resources to complete corresponding AI tasks.

A large-scale AI model may be obtained in an integration manner. An AI model obtained in an integration manner may be referred to as an AI integrated model, and a plurality of AI models used to form the AI integrated model may be referred to as base models. In an inference phase, outputs of a plurality of base models in an AI integrated model may be fused to obtain a fused inference result. For different AI tasks, the AI integrated model may use different fusion manners. For example, for a classification task, outputs of the plurality of base models may be usually voted to obtain an inference result of the AI integrated model. For another example, for a regression task, an average value may be usually obtained for outputs of the plurality of base models, and the average value is used as an inference result of the AI integrated model.

However, in the foregoing method for obtaining a final inference result by using the AI integrated model, differences and correlations of the base models in the AI integrated model are not considered, and outputs of the base models are directly averaged, or voting processing is performed, to implement fusion of the base models. As a result, the AI integrated model cannot reflect a mutual collaboration capability of the base models in the AI integrated model. Consequently, precision of an execution result of an AI task obtained based on the AI integrated model needs to be improved.

**SUMMARY**

This application provides a method for constructing an AI integrated model. In the method, a graph network model and a plurality of base models are constructed as an AI integrated model. When the graph network model in the AI integrated model fuses outputs of the plurality of base models, differences and correlations between the base models are fully considered. Therefore, using a feature obtained based on the graph network model for AI task processing improves precision of an obtained execution result of an AI task.

According to a first aspect, this application provides a method for constructing an AI integrated model. The method may be executed by an AI integrated model management platform. The management platform may be a software system used to construct an AI integrated model. A computing device or a computing device cluster runs program code of the software system, to perform the method for constructing an AI integrated model. The management platform may alternatively be a hardware system used to construct an AI integrated model. The following uses an example in which the management platform is a software system for description.

Specifically, the management platform may obtain a training dataset, an initial graph network model, and a plurality of base models; then iteratively train the initial graph network model by using training data in the training dataset and the plurality of base models, to obtain a graph network model; and then construct the AI integrated model based on the graph network model and the plurality of base models, where an input of the graph network model is a graph structure consisting of outputs of the plurality of base models.

In the method, the management platform constructs the graph structure based on the outputs of the plurality of base models, and then processes the graph structure by using the graph network model, to fuse the outputs of the plurality of base models. Since the graph network model considers neighboring nodes of each node in the graph structure when processing the graph structure, the graph network model fully considers differences and correlations between the base models when fusing the outputs of the plurality of base models. Therefore, compared with using a feature obtained based on any base model for processing a subsequent AI task, using a feature obtained based on the graph network model for processing a subsequent AI task can obtain a more accurate AI task execution result. In other words, the technical solutions of this application improve precision of an obtained AI task execution result.

In addition, the management platform fuses the outputs of the plurality of base models by using the graph network model, and may train the AI integrated model in an end-to-end parallel training manner. This reduces model training difficulty, improves model training efficiency, and ensures generalization performance of the AI integrated model obtained through training.

In some possible implementations, in a process of iteratively training, by the management platform, the initial graph network model by using the training data in the training dataset and the plurality of base models, each iteration includes: inputting first training data in the training dataset into each base model, to obtain an output obtained after each base model performs inference on the first training data; then constructing a graph structure by using outputs obtained after the plurality of base models perform inference on the first training data; and then training the initial graph network model by using the graph structure.

The initial graph network model is trained by using the graph structure, so that differences and correlations between the base models can be fully considered when the graph network model obtained through training fuses the outputs of the plurality of base models. Therefore, a feature obtained based on the graph network model is used for processing an AI task, thereby improving precision of an execution result of the AI task.

In some possible implementations, the plurality of base models include one or more of the following types of AI models: a decision tree model, a random forest model, and a neural network model. The decision tree model, the random forest model, and the like may be used to process structured data, and the neural network model may be used to process unstructured data such as data of a type such as an image, a text, a voice, or a video. Different AI integrated models can be constructed based on different base models, for example, an AI integrated model for processing structured data and an AI integrated model for processing unstructured data, meeting different service requirements.

In some possible implementations, the management platform may train a supernet to obtain a plurality of base models from the supernet. The base model obtained by the management platform from the supernet is a neural network model. The neural network model is generated by the management platform based on a selection of a user through neural network search.

Compared with a base model obtained from a built-in model of the management platform or a model uploaded by a user in advance, a base model obtained by training a supernet in real time has a relatively high matching degree with an AI task. Therefore, precision of an execution result of an AI task that is obtained based on the AI integrated model can be improved.

In some possible implementations, the management platform may combine the base models, to construct an AI integrated model of a specified size, so as to meet a personalized requirement of a user. In a process of constructing the AI integrated model, the management platform further supports addition or deletion of a base model, thereby reducing costs of iterative update of the AI integrated model.

Further, both the base model and the AI integrated model may be used to extract a feature. Therefore, the management platform may first obtain an inference result based on the base model, without waiting for completion of AI integrated model construction, thereby shortening an inference time and improving inference efficiency. In addition, utilization of an intermediate result (for example, the inference result of the base model) is improved.

In some possible implementations, when training the supernet to obtain the plurality of base models from the supernet, the management platform may train the supernet by using the training data in the training dataset, to obtain an $i^{th}$ base model, where i is a positive integer. Then, the management platform may update a weight of the training data in the training dataset based on performance of the $i^{th}$ base model, and train the supernet by using the training data with an updated weight in the training dataset, to obtain an $(i+1)^{th}$ base model.

The weight of the training data may represent a probability that the training data is used to train the supernet. The management platform updates the weight of the training data, so that the probability that the training data in the training dataset is used to train the supernet can be updated. In this way, targeted training can be performed based on some training data, to obtain a new base model. The new base model may implement performance complementarity with the original base model, and therefore, precision of an execution result of an AI task obtained by using an AI integrated model constructed based on a plurality of base models can be further improved.

In some possible implementations, when performance of the $i^{th}$ base model for second-type training data is higher than performance of the $i^{th}$ base model for first-type training data, the management platform may increase a weight of the first-type training data in the training dataset, and/or reduce a weight of the second-type training data in the training dataset. In this way, the management platform may focus on training the supernet based on the training data that is incorrectly classified, to obtain a new base model. In this way, the plurality of obtained base models may complement each other, thereby improving precision of an AI task execution result obtained based on the AI integrated model.

In some possible implementations, when training the supernet by using the training data with an updated weight, the management platform may fine tune the supernet by using the training data with the updated weight. Because the management platform may continue to train the trained supernet, and does not need to start training from the beginning, training efficiency is improved, and a training progress is accelerated.

In some possible implementations, the management platform may determine a similarity between outputs obtained after every two of the plurality of base models perform inference on the first training data, then use an output obtained after each of the plurality of base models performs inference on the first training data as a node of the graph structure, determine an edge between the nodes based on the similarity, and obtain the graph structure based on the nodes and the edges.

In the graph structure constructed in the foregoing manner, information such as a similarity between outputs of different base models may be retained by using an edge between nodes. Therefore, the AI integrated model may process the graph structure by using the graph network model, so that outputs of different base models are fused based on information such as a similarity between outputs of different base models, and the fused feature is used for processing an AI task, thereby improving precision of an execution result of the AI task.

In some possible implementations, the graph network model includes any one of a graph convolution network model, a graph attention network model, a graph autoencoder model, a graph generative network model, or a graph spatial-temporal network model. A graph network model such as a graph convolution network model has a powerful expression capability, and in particular, has a powerful expression capability for non-Euclidean data (non-Euclidean structural data), and can effectively aggregate features output by different base models. Using the feature obtained based on the graph network model for processing an AI task improves precision of an execution result of the AI task.

In some possible implementations, the graph network model is a graph convolution network model obtained by simplifying ChebNet. ChebNet approximates a convolution kernel by using higher-order approximation (for example, polynomial expansion) of the Laplacian matrix. In this way, a quantity of parameters is greatly reduced, and the graph convolution network model has locality.

According to a second aspect, this application provides an AI integrated model inference method. The method may be performed by an inference apparatus, and the AI integrated model includes a graph network model and a plurality of base models. The inference apparatus may obtain input data, and then input the input data into each base model in the AI integrated model, to obtain an output obtained after each base model performs inference on the input data. Each base model is a trained AI model. Then, the inference apparatus may construct a graph structure by using outputs of the plurality of base models, input the graph structure into the graph network model, and obtain an inference result of the AI integrated model based on the graph network model.

In the method, the inference apparatus may construct the graph structure by using the outputs of the plurality of base models, and process the graph structure by using the graph network model in the AI integrated model. In this way, the outputs of the plurality of base models can be fused based on differences and correlations between the base models, thereby improving precision of an execution result of an AI task that is obtained based on the AI integrated model.

In some possible implementations, the inference apparatus may determine a similarity between outputs of every two of the plurality of base models, then use the output of each of the plurality of base models as a node of the graph structure, determine an edge between the nodes based on the similarity, and obtain the graph structure based on the nodes and the edges. In this way, the inference apparatus may store, based on information about the edges in the graph structure, information such as similarities and differences between the outputs of the plurality of base models, and fuse the outputs of the plurality of base models based on the information, thereby improving precision of an execution result of an AI task that is obtained based on the AI integrated model.

In some possible implementations, the inference result of the AI integrated model is a feature of the input data. The feature of the input data may be a fused feature obtained by fusing, by the graph network model in the AI integrated model, features extracted by the plurality of base models.

In some possible implementations, the inference apparatus may input the inference result of the AI integrated model into a decision layer, and use an output of the decision layer as an execution result of an AI task. The decision layer may be a classifier, a regression device, or the like.

Because the feature extracted by the inference apparatus by using the AI integrated model is a feature that is obtained through fusion based on similarities and differences of the plurality of base models, and further decision-making is performed based on the feature to obtain the execution result of the AI task, precision of the execution result of the AI task can be improved.

In some possible implementations, the inference apparatus may input the inference result of the AI integrated model into a task model, perform further feature extraction on the inference result by using the task model, make a decision based on a feature obtained after the further feature extraction, and use a result obtained through the decision as an execution result of an AI task, where the task model is an AI model that is trained for the AI task.

In the method, the inference apparatus uses the AI integrated model to preprocess input data, so that a downstream task model performs feature extraction and decision-making based on preprocessed data, to complete a corresponding AI task. The task model performs feature extraction and decision-making on the preprocessed data, instead of directly performing feature extraction and decision-making on the original input data. Therefore, a high response speed and high response efficiency can be achieved.

According to a third aspect, this application provides an AI integrated model management system. The system includes:

an interaction unit, configured to obtain a training dataset, an initial graph network model, and a plurality of base models, where each base model is a trained AI model;

a training unit, configured to iteratively train the initial graph network model by using training data in the training dataset and the plurality of base models, to obtain a graph network model; and

a construction unit, configured to construct the AI integrated model based on the graph network model and the plurality of base models, where an input of the graph network model is a graph structure consisting of outputs of the plurality of base models.

In some possible implementations, in a process in which the training unit iteratively trains the initial graph network model by using training data in the training dataset and the plurality of base models, each iteration includes:

inputting first training data in the training dataset into each base model, to obtain an output obtained after each base model performs inference on the first training data;

constructing a graph structure by using outputs obtained after the plurality of base models perform inference on the first training data; and

training the initial graph network model by using the graph structure.

In some possible implementations, the plurality of base models include one or more of the following types of AI models: a decision tree model, a random forest model, and a neural network model.

In some possible implementations, the interaction unit is specifically configured to:
train a supernet by using the training unit, to obtain the plurality of base models from the supernet.

In some possible implementations, the training unit is specifically configured to:

train the supernet by using training data in the training dataset, to obtain an $i^{th}$ base model, where i is a positive integer;

update a weight of the training data in the training dataset based on performance of the $i^{th}$ base model; and

train the supernet by using the training data with an updated weight in the training dataset, to obtain an $(i+1)^{th}$ base model.

In some possible implementations, the training unit is specifically configured to:
when performance of the $i^{th}$ base model for second-type training data is higher than performance of the $i^{th}$ base model for first-type training data, increase a weight of the first-type training data in the training dataset, and/or reduce a weight of the second-type training data in the training dataset.

In some possible implementations, the training unit is specifically configured to:
fine tune the supernet by using the training data with the updated weight.

In some possible implementations, the training unit is specifically configured to:

determine a similarity between outputs obtained after every two of the plurality of base models perform inference on the first training data; and

use an output obtained after each of the plurality of base models performs inference on the first training data as a node of the graph structure, determine an edge between the nodes based on the similarity, and obtain the graph structure based on the nodes and the edges.

In some possible implementations, the graph network model includes any one of a graph convolution network model, a graph attention network model, a graph autoencoder model, a graph generative network model, or a graph spatial-temporal network model.

In some possible implementations, the graph convolution network model includes a graph convolution network model obtained by simplifying ChebNet.

According to a fourth aspect, this application provides an AI integrated model inference apparatus. The AI integrated model includes a graph network model and a plurality of base models, and the apparatus includes:

a communication module, configured to obtain input data;

a first inference module, configured to input the input data into each base model in the AI integrated model, to obtain an output obtained after each base model performs inference on the input data, where each base model is a trained AI model;

a construction module, configured to construct a graph structure by using outputs of the plurality of base models; and

a second inference module, configured to input the graph structure into the graph network model, and obtain an inference result of the AI integrated model based on the graph network model.

In some possible implementations, the construction module is specifically configured to:

determine a similarity between outputs of every two of the plurality of base models; and

use the output of each of the plurality of base models as a node of the graph structure, determine an edge between the nodes based on the similarity, and obtain the graph structure based on the nodes and the edges.

In some possible implementations, the inference result of the AI integrated model is a feature of the input data.

In some possible implementations, the apparatus further includes:

an execution module, configured to input the inference result of the AI integrated model into a decision layer, and use an output of the decision layer as an execution result of an AI task.

In some possible implementations, the apparatus further includes:

an execution module, configured to input the inference result of the AI integrated model into a task model, perform further feature extraction on the inference result by using the task model, make a decision based on a feature obtained after the further feature extraction, and use a result obtained through the decision as an execution result of an AI task, where the task model is an AI model that is trained for the AI task.

According to a fifth aspect, this application provides a computing device cluster, where the computing device cluster includes at least one computing device. The at least one computing device includes at least one processor and at least one memory. The processor and the memory communicate with each other. The at least one processor is configured to execute instructions stored in the at least one memory, so that the computing device cluster performs the method according to any one of the implementations of the first aspect or the second aspect.

According to a sixth aspect, this application provides a computer-readable storage medium, where the computer-readable storage medium stores instructions, and the instructions instruct a computing device or a computing device cluster to perform the method according to any one of the implementations of the first aspect or the second aspect.

According to a seventh aspect, this application provides a computer program product including instructions. When the computer program product runs on a computing device or a computing device cluster, the computing device or the computing device cluster is enabled to perform the method according to any one of the implementations of the first aspect or the second aspect.

In this application, based on the implementations according to the foregoing aspects, the implementations may be combined to provide more implementations.

**BRIEF DESCRIPTION OF DRAWINGS**

To describe the technical methods in embodiments of this application more clearly, the following briefly describes the accompanying drawings used in describing embodiments.

FIG. 1 is a diagram of a system architecture of an AI integrated model management platform according to an embodiment of this application;

FIG. 2A is a schematic diagram of deployment of a management platform according to an embodiment of this application;

FIG. 2B is a schematic diagram of deployment of a management platform according to an embodiment of this application;

FIG. 3 is a schematic diagram of an interaction interface according to an embodiment of this application;

FIG. 4 is a flowchart of a method for constructing an AI integrated model according to an embodiment of this application;

FIG. 5 is a diagram of a principle of a graph convolution network model according to an embodiment of this application;

FIG. 6A is a schematic flowchart of obtaining a base model according to an embodiment of this application;

FIG. 6B is a schematic flowchart of neural network search according to an embodiment of this application;

FIG. 7 is a schematic flowchart of obtaining a plurality of base models according to an embodiment of this application;

FIG. 8 is a schematic diagram of a structure of an inference apparatus according to an embodiment of this application;

FIG. 9 is a schematic diagram of deployment of an inference apparatus according to an embodiment of this application;

FIG. 10 is a flowchart of an AI integrated model inference method according to an embodiment of this application;

FIG. 11 is a schematic diagram of a structure of a computing device cluster according to an embodiment of this application; and

FIG. 12 is a schematic diagram of a structure of a computing device cluster according to an embodiment of this application.

## DESCRIPTION OF EMBODIMENTS

The terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features.

Some technical terms used in embodiments of this application are first described.

An AI model is an algorithm model that is obtained through AI technology development and training such as machine learning and that is used to implement a specific AI task. For example, the AI model may include a support vector machine (support vector machine, SVM) model, a random forest (random forest, RF) model, and a decision tree (decision tree, DT) model. The AI model may alternatively include a deep learning (deep learning, DL) model, for example, a neural network model.

To improve AI model performance, a plurality of independent AI models can be combined to form a large-scale AI model (also called a big AI model). A manner of forming a large-scale AI model by using a plurality of AI models may include an integration manner, and the large-scale AI model obtained in the integration manner is also referred to as an AI integrated model. An AI model used for feature extraction in the AI integrated model is also referred to as a base model or a base learner. In actual application, the base model may be a decision tree model, a random forest model, a neural network model, or the like. It should be understood that base models included in the AI integrated model in this application run relatively independently. During inference, inference results (that is, outputs) of a plurality of base models are combined in a specific manner, and an output obtained after combination is used as an output of the AI integrated model. In other words, integration in this application is actually integration of inference results of the base models.

A graph network model is an AI model used to process a graph structure, for example, a graph neural network model. The graph structure is a data structure including a plurality of nodes (also referred to as vertex vectors). An edge (edge) is included between at least two nodes in the plurality of nodes. In actual application, a node may be represented by using a circle, and an edge may be represented by using a connection line between circles. The graph structure can be used in different scenarios to express associated data. For example, the graph structure may be used to represent a relationship between users in a social network. Specifically, a node in the graph structure represents a user, and an edge in the graph structure represents a relationship between users, for example, colleagues, friends, or relatives. For another example, the graph structure may be used to represent a route. Specifically, a node in the graph structure is used to represent a city, and an edge in the graph structure is used to represent a route between cities.

A decision layer is an algorithm structure used to make a decision based on an input feature. The decision layer is usually used together with an AI model used for feature extraction or an AI integrated model, to complete a specific AI task. For example, a base model or a graph network model may extract a feature, and then the extracted feature may be input to the decision layer for decision-making. The decision layer may include different types. For example, the decision layer may be a classifier or a regression device. It should be understood that, in some cases, the AI model or the AI integrated model may not include a decision layer, that is, is used only for feature extraction. In an inference process, a feature obtained through the AI model or the AI integrated model may be input to the decision layer to implement a specific AI task. In some other cases, the decision layer may alternatively be used as a part of the AI model or the AI integrated model, that is, the AI model or the AI integrated model is used for both feature extraction and decision-making. In this case, in an inference phase, the AI model or the AI integrated model can directly obtain a result of an AI task. Unless otherwise specified, the base model and the graph network model in the subsequent AI integrated model in this application are used only for feature extraction, and do not include a function of a decision layer. A feature obtained by using the AI integrated model may continue to be input to the decision layer based on a target of an AI task.

An AI task is a task completed by using a function of an AI model or an AI integrated model. For example, the AI task may include an image processing (for example, image segmentation, image classification, image recognition, or image annotation) task, a natural language processing (language translation or intelligent Q&A) task, a speech processing (speech wakeup, speech recognition, or speech synthesis) task, or the like. Different AI tasks have different difficulty levels. For example, some AI tasks can be completed by a simple trained AI model and a decision layer. For another example, some AI tasks need to be completed by a large-scale trained AI model and a decision layer.

In some scenarios, inference precision of a single AI model is not high. Using a plurality of AI models as base models to construct an AI integrated model is a policy for improving the precision. In a related technology, outputs of the plurality of base models may be fused in a voting manner or a weighted average manner, to obtain an inference result of the AI integrated model. However, the inference result of the AI integrated model obtained by using the method does not consider a difference or a correlation of the base models. Therefore, precision of an AI task execution result obtained based on the AI integrated model is still not high. In addition, the plurality of base models in the AI integrated model are usually obtained through parallel training, and there is no strong dependency relationship between the base models. In this case, it is difficult to fully explore advantages of the base models, and an inference effect of the AI integrated model for some input data may be poor, thereby affecting precision of an AI task execution result obtained based on the AI integrated model.

In view of this, an embodiment of this application provides a method for constructing an AI integrated model. The method may be executed by an AI integrated model management platform. The management platform may obtain a training dataset, an initial graph network model, and a plurality of base models; then iteratively train the initial graph network model by using training data in the training dataset and the plurality of base models, to obtain a graph network model; and then construct the AI integrated model based on the graph network model and the plurality of base models, where an input of the graph network model is a graph structure consisting of outputs of the plurality of base models.

In the method, the management platform constructs the graph structure based on the outputs of the plurality of base models, and then processes the graph structure by using the graph network model, to fuse the outputs of the plurality of base models. Since the graph network model considers neighboring nodes of each node in the graph structure when processing the graph structure, the graph network model fully considers differences and correlations between the base models when fusing the outputs of the plurality of base models. Therefore, using a feature obtained based on the graph network model for AI task processing improves precision of an AI task execution result obtained based on the AI integrated model.

In addition, in some embodiments, when obtaining a plurality of base models, the management platform may obtain a base model based on training for a supernet, and update, based on performance of the current base model, a weight of training data used for training the supernet, for example, increase a weight of base model misclassification training data. Then, a next base model is obtained by using the training data with an updated weight. In this way, the plurality of base models may complement each other, thereby improving precision of an AI task execution result obtained based on the AI integrated model.

To make the technical solutions of this application clearer and easier to understand, the following describes the AI integrated model management platform with reference to the accompanying drawings.

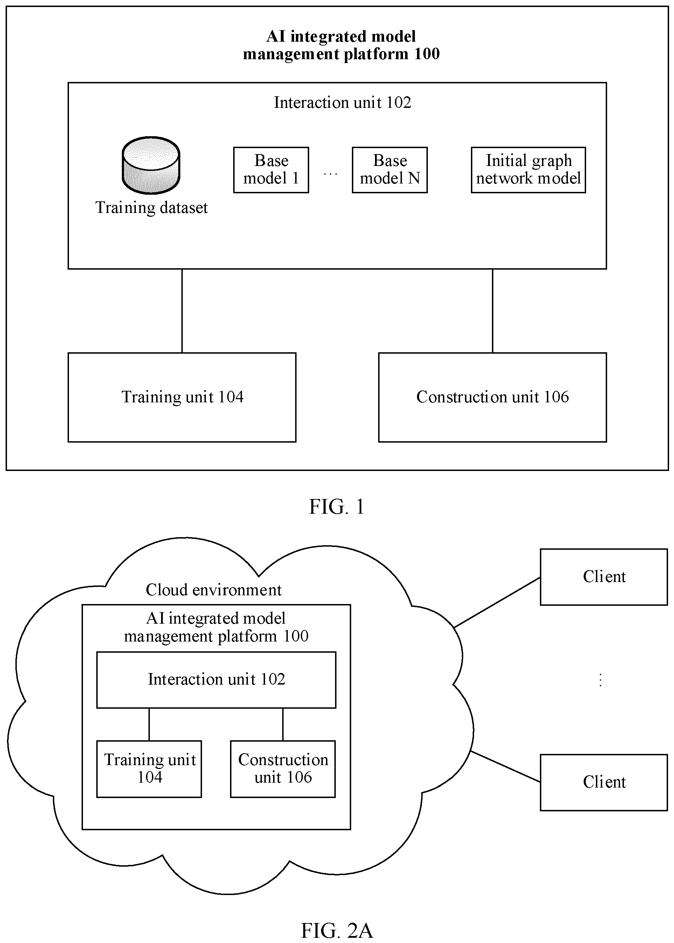

Refer to a schematic diagram of a structure of an AI integrated model management platform shown in FIG. 1. The management platform 100 includes an interaction unit 102, a training unit 104, and a construction unit 106. Further, the management platform 100 may further include a storage unit 108. The following describes the units separately.

The interaction unit 102 is configured to obtain a training dataset, an initial graph network model, and a plurality of base models. Each base model is a trained AI model. The interaction unit 102 may obtain the training dataset, the initial graph network model, and the plurality of base models in a plurality of manners. For example, the interaction unit 102 may obtain, based on a selection of a user, a training dataset, an initial graph network model, and a plurality of base models that are used to construct the AI integrated model from training datasets, initial graph network models, and base models that are built in the management platform 100. For another example, the interaction unit 102 may alternatively receive a training dataset, an initial graph network model, and a plurality of base models that are uploaded by a user.

The training unit 104 is configured to iteratively train the initial graph network model by using training data in the training dataset and the plurality of base models, to obtain a graph network model. When the training unit 104 iteratively trains the initial graph network model, each iteration includes: inputting first training data in the training dataset into each base model, to obtain an output obtained after each base model performs inference on the first training data; then constructing a graph structure by using outputs obtained after the plurality of base models perform inference on the first training data; and training the initial graph network model by using the graph structure.

The first training data may be several pieces of training data in the training dataset. For example, training data in the training dataset may be divided into several batches based on a batch size (batch size), and an amount of training data included in each batch is equal to the batch size. Correspondingly, the first training data may be a batch of training data in the several batches of training data.

In some possible implementations, the training unit 104 is alternatively configured to train a supernet, to obtain the plurality of base models from the supernet. The training unit 104 may update, based on performance of a current base model, a weight of training data used for training the supernet, for example, increase a weight of base model misclassification training data. Then, the training unit 104 trains the supernet by using the training data with an updated weight, to obtain a next base model. In this way, the plurality of base models may complement each other, thereby improving precision of an AI task execution result obtained based on the AI integrated model.

The construction unit 106 is configured to construct the AI integrated model based on the graph network model and the plurality of base models. An input of the graph network model is a graph structure consisting of outputs of the plurality of base models. Specifically, the construction unit 106 is configured to use the graph structure obtained by using the outputs of the plurality of base models as an input of the graph network model, so that in an inference phase, the plurality of base models and the graph network model may be jointly used to process input data, to obtain an inference result of the AI integrated model. Because the construction unit 106 connects the plurality of base models and the graph network model based on the output and the input, in the inference phase, the AI integrated model can be used as a whole to automatically perform inference on the input data.

The storage unit 108 is configured to store the training datasets, the initial graph network models, and/or the base models that are built in the management platform 100. Further, the storage unit 108 may further store the training dataset, the initial graph network model, and/or the base models that are uploaded by the user. In some embodiments, the storage unit 108 may store the base model obtained by the training unit 104 by training the supernet. The storage unit 108 may further store a training parameter and the like that are set by the user by using the interaction unit 102. This is not limited in this embodiment.

FIG. 1 describes the architecture of the management platform 100 in detail. The following describes in detail a deployment manner of the management platform 100. It should be understood that the AI integrated model management platform 100 may also be referred to as an AI integrated model management system. The AI integrated model management system may be a software system deployed in a hardware device or a hardware device cluster, or the AI integrated model management system may be a hardware system including one or more hardware devices. In this application, all descriptions of the management platform 100 are example descriptions of the AI integrated model management system.

In some possible implementations, as shown in FIG. 2A, the management platform 100 may be deployed in a cloud environment. When the management platform 100 is a software system, the management platform 100 is specifically one or more computing devices (for example, a central server) deployed in the cloud environment, or when the management platform 100 is a hardware system, the management platform 100 may include one or more computing devices in the cloud environment. The cloud environment indicates a central computing device cluster that is owned by a cloud service provider and that is used to provide computing, storage, and communication resources.

During specific implementation, the user may trigger, by using a client (for example, a browser or a dedicated client), an operation of starting the management platform 100, and then the user interacts with the management platform 100 by using the client, to construct the AI integrated model.

Specifically, the interaction unit 102 of the management platform 100 may provide interaction logic, and the client may present an interaction interface to the user based on the interaction logic. The interaction interface may be, for example, a graphical user interface (graphical user interface, GUI) or a command user interface (command user interface, CUI).

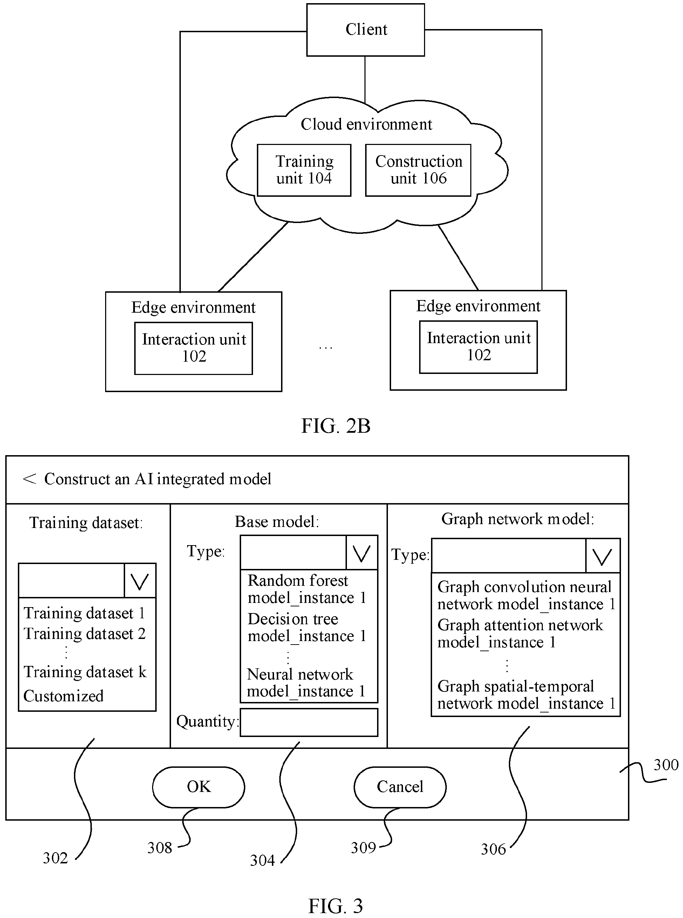

For ease of understanding, the following uses an example in which the interaction interface is a GUI for description. Refer to a schematic diagram of an interaction interface 300 shown in FIG. 3. The interaction interface 300 supports a user in configuring a training dataset, a base model, and an initial graph network model. Specifically, the interaction interface 300 carries a training dataset configuration component 302, a base model configuration component 304, and an initial graph network model configuration component 306.

The training dataset configuration component 302 includes a drop-down control. When the drop-down control is triggered, a drop-down box may be displayed. The user may select a built-in training dataset of the management platform 100 from the drop-down box, for example, any one of a training dataset 1 to a training dataset k, where k is a positive integer. In some embodiments, the user may alternatively select a customized training dataset. Specifically, when the user selects the customized training dataset from the drop-down box, the interaction interface 300 may provide an interface for the user to enter an address of the customized training dataset. In this way, the client may obtain the customized training dataset based on the address.

Similarly, the base model configuration component 304 includes a drop-down control. When the drop-down control is triggered, a drop-down box may be displayed. The drop-down box may include base models built in the management platform 100, for example, a random forest model, a decision tree model, or a neural network model. The random forest model and the decision tree model may be trained AI models. It should be noted that at least one instance of the random forest model and/or at least one instance of the decision tree model may be built in the management platform 100. When the drop-down control of the base model configuration component 304 is triggered, at least one instance of various models built in the management platform 100 may be displayed by using the drop-down box. When the user selects an instance of the random forest model or an instance of the decision tree model, the user may further configure a quantity of the instances by using a quantity configuration control in the base model configuration component 304. Alternatively, the user may configure instances of a plurality of models as base models by using the drop-down control, and configure a quantity of instances for an instance of each model.

Further, the drop-down control may further support the user in uploading a customized model as a base model. Specifically, the drop-down box displayed by the drop-down control includes a user-defined model. The user may select a customized model, to trigger a process of uploading the customized model as a base model. Certainly, the user may alternatively upload a customized model in advance. In this way, when configuring a base model, the user may select a base model from the customized model uploaded by the user, to construct the AI integrated model.

The base model selected by the user may be built in the management platform, or may be uploaded by the user in advance. In some other embodiments, the base model selected by the user may alternatively be generated by the management platform based on the selection of the user. For example, when the user selects the neural network model, the interaction interface 300 may further provide an interface for the user to configure a related parameter used to obtain the neural network model. For example, when the neural network model is obtained in a manner of supernet sampling, the interaction interface 300 may provide interfaces for parameters such as a search space, a performance indicator, and a performance indicator reference value, so that the user can configure corresponding parameters by using the foregoing interfaces. In this way, the management platform 100 may obtain a plurality of base models in a neural network search manner based on the foregoing parameters.

The initial graph network model configuration component 306 includes a drop-down control. When the drop-down control is triggered, a drop-down box may be displayed. The user may select, from the drop-down box, an initial graph network model built in the management platform 100 or uploaded by the user, for example, any one of a graph convolution network (graph convolution networks, GCN) model, a graph attention network (graph attention networks, GAN) model, a graph autoencoder (graph antoencoders, GAE) model, a graph generative network (graph generative networks, GGN) model, or a graph spatial-temporal network (graph spatial-temporal networks, GSTN) model.

The interaction interface 300 further carries an OK control 308 and a Cancel control 309. When the Cancel control 309 is triggered, the selection of the user is canceled. When the OK control 308 is triggered, the client may submit the foregoing parameters configured by the user to the management platform 100. The management platform 100 may obtain a training dataset, an initial graph network model, and a plurality of base models based on the foregoing configuration, then iteratively train the initial graph network model based on the training dataset and the plurality of base models to obtain a graph network model, and then construct an AI integrated model based on the graph network model and the plurality of base models.

It should be noted that a plurality of users may trigger, by using respective clients, an operation of starting a management platform 100, so as to create, in a cloud environment, instances of management platforms 100 respectively corresponding to the plurality of users. Each user may interact with an instance of a corresponding management platform 100 by using a client of the user, so as to construct a respective AI integrated model.

Each user of the plurality of users may configure a corresponding training dataset, an initial graph network model, and a plurality of base models based on an AI task of the user. Training datasets, initial graph network models, and a plurality of base models configured by different users may be different. Correspondingly, AI integrated models constructed by different users may be different. In other words, the management platform 100 provides a one-stop AI integrated model construction method. Corresponding AI integrated models can be constructed for different AI tasks of different users or different AI tasks of a same user. This method has relatively high universality and availability, and can meet service requirements.

Alternatively, the management platform 100 may be deployed in an edge environment, and is specifically deployed on one or more computing devices (edge computing devices) in the edge environment, or the management platform 100 includes one or more computing devices in the edge environment. The edge computing device may be a server, a computing box, or the like. The edge environment indicates an edge computing device cluster that is relatively close to a terminal device (that is, an end-side device) in terms of geographical location and that is used to provide computing, storage, and communication resources. In some implementations, the management platform 100 may alternatively be deployed on a terminal device. The terminal device includes but is not limited to a user terminal such as a desktop computer, a notebook computer, or a smartphone.

In some other possible implementations, as shown in FIG. 2B, the management platform 100 may be deployed in different environments in a distributed manner. For example, the interaction unit 102 may be deployed in an edge environment, and the training unit 104 and the construction unit 106 may be deployed in a cloud environment. A user may trigger, by using a client, an operation of starting the management platform 100, to create an instance of the management platform 100. An instance of each management platform 100 includes an interaction unit 102, a training unit 104, and a construction unit 106. The foregoing units are deployed in a cloud environment and an edge environment in a distributed manner.

FIG. 2B is merely an implementation in which parts of the management platform 100 are deployed in different environments in a distributed manner. In another possible implementation of this embodiment of this application, parts of the management platform 100 may be respectively deployed in three environments of a cloud environment, an edge environment, and a terminal device, or two environments thereof.

The following describes in detail, from a perspective of the management platform 100 with reference to the accompanying drawing, a method for constructing an AI integrated model according to an embodiment of this application.

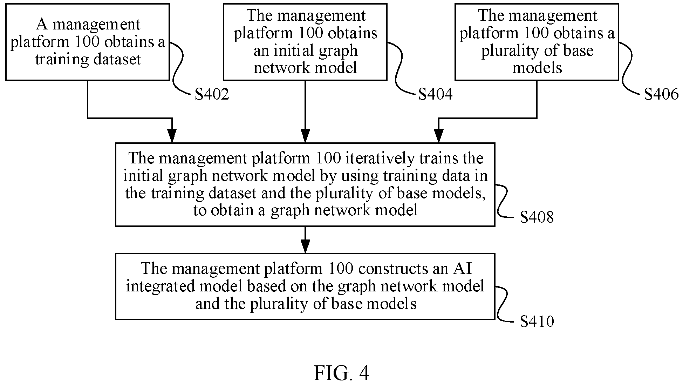

Refer to a flowchart of a method for constructing an AI integrated model shown in FIG. 4, the method includes the following steps.

S402: A management platform 100 obtains a training dataset.

Specifically, at least one training dataset may be built in the management platform 100. The built-in training dataset may be an open-source dataset obtained from an open-source community, such as ImageNet and OpenImage. In some embodiments, the built-in training dataset may alternatively include a dataset customized by an operator of the management platform 100, a private dataset leased or purchased by the operator of the management platform 100, or the like. A user may select one training dataset from the at least one training dataset built in the management platform 100. In this way, the management platform 100 may obtain the corresponding training dataset based on a selection operation of the user, to perform model training.

In some possible implementations, the user may alternatively not select the training dataset built in the management platform 100. For example, the user can upload a training dataset. Specifically, the user may enter, by using the interaction interface 300, an address or a path of the training dataset, and the management platform 100 obtains the corresponding training dataset based on the address or the path for model training.

S404: The management platform 100 obtains an initial graph network model.

Specifically, at least one initial graph network model may be built in the management platform 100. For example, one or more of a graph convolution network model, a graph attention network model, a graph autoencoder model, a graph generative network model, or a graph spatial-temporal network model may be built in the management platform 100. The user may select an initial graph network model from the at least one initial graph network model built in the management platform 100, to construct the AI integrated model.

In some possible implementations, the user may alternatively not select the initial graph network model built in the management platform 100. For example, the user can upload an initial graph network model. Specifically, the user may enter an address or a path of the initial graph network model by using the interaction interface 300, and the management platform 100 obtains the corresponding initial graph network model based on the address or the path, to construct the AI integrated model.

S406: The management platform 100 obtains a plurality of base models.

Specifically, the management platform 100 may obtain the plurality of base models based on a selection of the user. The base models are AI models trained through AI. The AI model may be a random forest model, a decision tree model, or a neural network model. The plurality of base models selected by the user may be built in the management platform 100, or may be uploaded by the user in advance. Certainly, the user may alternatively upload base models in real time, to facilitate the management platform 100 to obtain the base models.

For different types of models such as a random forest model, a decision tree model, and a neural network model, the management platform 100 may provide at least one instance of the foregoing models for the user to select. The instance provided by the management platform 100 may be built in the management platform 100, or may be uploaded by the user in advance. The user may select at least one instance from the instance as a base model used to construct the AI integrated model. In addition, the user may further configure a quantity of instances to N (N is an integer), so that the management platform 100 obtains N instances of the model, to construct the AI integrated model. Further, the user may select instances of a plurality of models as base models used to construct the AI integrated model, and the user may configure a quantity of instances for each instance, so that the management platform 100 obtains a corresponding quantity of instances to construct the AI integrated model.

In some possible implementations, the management platform 100 may alternatively generate a base model based on a selection of the user. For example, the user may choose to generate a neural network model as the base model. Specifically, the management platform 100 may train a supernet to obtain a plurality of base models from the supernet. A specific implementation in which the management platform 100 trains the supernet and obtains the plurality of base models from the supernet is described in detail below, and is not described in detail herein.

It should be noted that S402, S404, and S406 may be performed in parallel, or may be performed in a specified sequence. For example, the management platform 100 may first perform S404 and S406, and then perform S402. A sequence of performing S402 to S406 is not limited in this embodiment of this application.

S408: The management platform 100 iteratively trains the initial graph network model by using training data in the training dataset and the plurality of base models, to obtain a graph network model.

Specifically, each iteration includes: The management platform 100 inputs a part of training data (which may be referred to as first training data) in the training dataset to each base model, to obtain an output obtained after each base model performs inference on the first training data; then the management platform 100 constructs a graph structure by using outputs obtained after the plurality of base models perform inference on the first training data; and then the management platform 100 trains the initial graph network model by using the graph structure.

The first training data is several pieces of data in the training dataset. The training data in the training dataset may be divided into a plurality of batches based on a batch size, and the first training data may be one of the plurality of batches of training data. For example, the training dataset includes 10,000 pieces of training data, and the batch size may be 100. In this case, the training dataset may be divided into 100 batches, and the first training data may be one of the 100 batches of data. Each base model may perform feature extraction on the first training data, to obtain a feature. The feature may be actually represented by using a vector or a matrix. An output obtained after each base model performs inference on the first training data may include the foregoing feature.

The graph structure is a data structure including a plurality of nodes. Further, the graph structure further includes an edge between at least two nodes of the plurality of nodes. In some embodiments, the management platform 100 may determine a similarity between outputs obtained after the plurality of base models perform inference on the first training data. For example, the management platform 100 may determine the similarity between the outputs of the plurality of base models based on a distance between features output by the plurality of base models. Then, the management platform 100 uses the output obtained after each of the plurality of base models performs inference on the first training data as a node of the graph structure, determines an edge between the nodes based on the similarity, and obtains the graph structure based on the nodes and the edges.

The management platform 100 trains the initial graph network model by using the graph structure. Specifically, the graph structure may be input into the initial graph network model, and the initial graph network model may be used to aggregate node information based on edge information, so as to extract a feature from the graph structure. It should be noted that the feature is a feature obtained by fusing the outputs of the plurality of base models. Then, the management platform 100 may input the feature output by the initial graph network model to a decision layer for decision-making, to obtain a decision result. The decision layer may be a classifier, a regression device, or the like. Correspondingly, the decision result may be a classification result or a regression result. The management platform 100 may calculate a function value of a loss function, that is, a loss value, based on the decision result and a label of the training data. Then, the management platform 100 may update a parameter of the initial graph network model by using a gradient descent method based on a gradient of the loss value, to implement iterative training of the initial graph network model.

For ease of understanding, in this embodiment of this application, an example in which the initial graph network model is a graph convolution network model is further used for description.

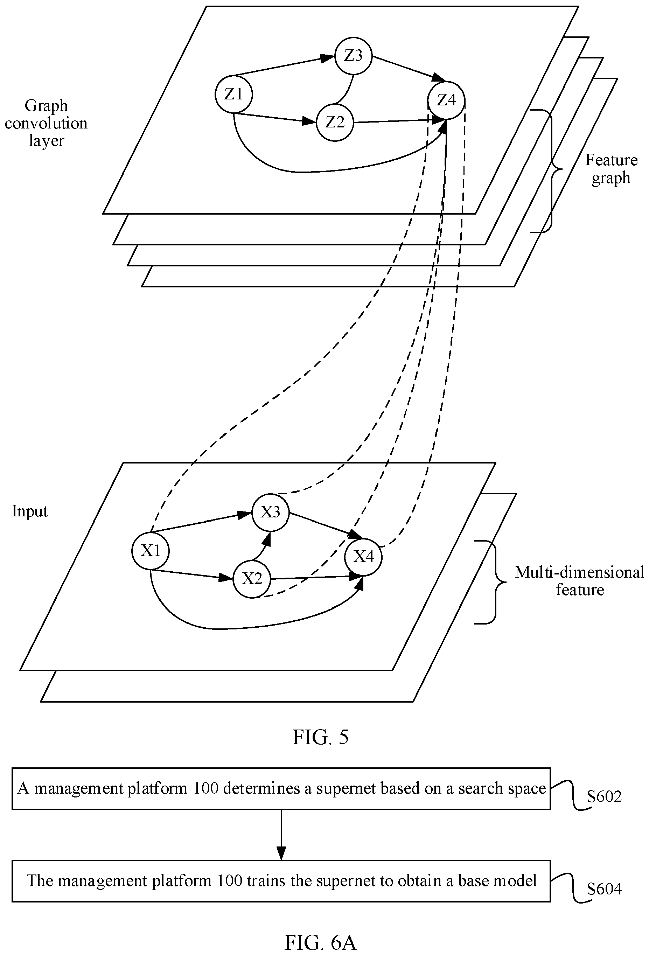

Refer to a diagram of a principle of a graph convolution network model shown in FIG. 5. In this example, the management platform 100 obtains a plurality of base models such as a base model 1, a base model 2, a base model 3, and a base model 4, and the management platform 100 may construct a graph structure based on outputs of the base model 1 to the base model 4. For ease of description, X1, X2, X3, and X4 are used to represent the outputs of the base model 1 to the base model 4 respectively. The management platform 100 uses X1, X2, X3, and X4 as nodes, and determines edges of the nodes based on similarities of X1, X2, X3, and X4. For example, edges X1X2, X1X3, X1X4, X2X3, X2X4, and X3X4 may be determined based on the similarities, and a graph structure may be obtained based on the foregoing nodes and edges.

Then, the management platform 100 inputs the graph structure into the graph convolution network model. The graph convolution network model includes a graph convolution layer. The graph convolution layer may perform convolution on the input of the graph convolution network model, to obtain a convolution result. The graph convolution network model may be represented by using a mapping f(.). The mapping f(.) enables the graph convolution network model to aggregate node information based on edge information. X4 is used as an example. When the graph convolution layer of the graph convolution network model performs convolution on X4, X1, X2, and X3 that are associated with X4 also participate in convolution operation, to obtain a convolution result Z4. Similarly, the graph convolution layer may perform convolution operation on X1, X2, and X3, to obtain convolution results Z1, Z2, and Z3. The convolution result is used to represent a feature extracted by the graph convolution network model, and the feature may be a feature obtained by fusing outputs of a plurality of base models.

In some possible implementations, considering a problem of a large quantity of graph convolution kernel parameters in spectrum-based graph convolution, the management platform 100 may further use a graph convolution network model obtained by simplifying ChebNet as an initial graph convolution network model.

ChebNet approximates a convolution kernel $g_\theta$ by using higher-order approximation (for example, polynomial expansion) of the Laplacian matrix. In this way, a quantity of parameters is greatly reduced, and the graph convolution network model has locality. Specifically, the convolution kernel $g_\theta$ is parameterized into a form of Formula (1):

$$g_\theta(\Lambda) \approx \sum_{k=0}^{K-1} \theta_k \Lambda^k \qquad (1)$$

$\theta_k$ is a learnable parameter in the graph convolution network model, and represents a weight of a $k^{th}$ item in a polynomial. $K$ is the highest order of the polynomial, and $\Lambda$ is an eigenvalue matrix, and is usually a symmetric matrix.

The foregoing ChebNet may be further simplified to obtain a first-order approximate version of a GCN. Specifically, it is assumed that $K = 1$, and a maximum eigenvalue of the Laplacian matrix $\lambda_{max} \approx 2$. In this case, a convolution result of the simplified GCN may be represented as Formula (2):

$$g_\theta * x = \theta_0 x + \theta_1 (L - I_n) = \theta_0 x + \theta_1 \left( D^{-\frac{1}{2}}(D - A)D^{-\frac{1}{2}} - I_n \right)$$
$$= \theta_0 x - \theta_1 D^{-\frac{1}{2}} A D^{-\frac{1}{2}} x \qquad (2)$$

$x$ is an input, and $g_\theta$ is a convolution kernel. $\theta_0$ and $\theta_1$ are weights of polynomials. L is a normalized Laplacian matrix, and $I_n$ is an n-order identity matrix. $A$ is an adjacency matrix, and D is a degree matrix.

To avoid overfitting, $\theta = \theta_0 = -\theta_1$ may be constrained, to reduce parameters of the graph convolution network model. In this case, Formula (2) may be further simplified as:

$$g_\theta * x = \theta(I_N + D^{-\frac{1}{2}}AD^{-\frac{1}{2}})x \tag{3}$$

Repeated use of an operator $I_N + D^{-\frac{1}{2}}AD^{-\frac{1}{2}}$ may cause gradient explosion or disappearance. To enhance stability during training, $I_N + D^{-\frac{1}{2}}AD^{-\frac{1}{2}}$ may be further normalized, which is specifically shown in Formula (4):

$$I_N + D^{-\frac{1}{2}}AD^{-\frac{1}{2}} \xrightarrow{\hat{A}=A+I_N} \widehat{D}^{-\frac{1}{2}}\hat{A}\widehat{D}^{-\frac{1}{2}} \tag{4}$$

$\hat{A}$ is a matrix A + $I_n$ obtained after an identity matrix is added to the adjacency matrix A, $\hat{D}$ is a matrix obtained after a self-loop is added, and $\hat{D}_{ii} = \Sigma_j \hat{A}_{ij}$.

The foregoing convolution process is described by using one-dimensional convolution as an example. The following convolution result may be obtained by extending one-dimensional convolution to multi-dimensional convolution:

$$Z = \widehat{D}^{-\frac{1}{2}}\hat{A}\widehat{D}^{-\frac{1}{2}}XW \tag{5}$$

$Z$ is used to represent a convolution result of multi-dimensional convolution, $X$ represents an input matrix form, that is, an input matrix, and $W$ represents a parameter matrix. The parameter matrix includes a feature transform parameter, for example, a parameter $\theta$ that can be learned in the graph convolution network model, which is specifically a parameter used to enhance a feature.

The management platform 100 may fuse outputs of base models by using the initial graph convolution network model according to Formula (5), to obtain a fused feature. The feature may be specifically the convolution result $Z$ shown in Formula (5), and then the feature is input to the decision layer such as a classifier, to obtain a classification result. The management platform 100 may calculate a loss value based on the classification result and a label of training data, and then update the parameter matrix $W$ of the graph convolution network model based on a gradient of the loss value, to implement iterative training on the graph convolution network model.

When the trained initial graph network model (for example, the graph convolution network model) meets a preset condition, the management platform 100 may stop training, and determine the trained initial graph network model as the graph network model. The preset condition may be set based on an empirical value. For example, the preset condition may be that the loss value tends to converge, the loss value is less than a preset value, or performance reaches preset performance. The performance may be an indicator such as precision. Based on this, that performance reaches preset performance may be that the precision reaches 95%.

S410: The management platform 100 constructs the AI integrated model based on the graph network model and the plurality of base models.

Specifically, the management platform 100 may form the graph structure by using the outputs of the plurality of base models, and then use the graph structure as an input of the graph network model, to implement integration of the plurality of base models and the graph network model, and further obtain the AI integrated model. The base model is used to extract a feature, and the graph network model is used to fuse features extracted by the plurality of base models, to obtain a fused feature. In some possible implementations, the AI integrated model may further integrate a decision layer, for example, a classifier or a regression device. After the fused feature is input to the decision layer, a classification result or a regression result can be obtained to complete a specific AI task.

Based on the foregoing content description, the embodiment of this application provides a method for constructing an AI integrated model. In this method, the management platform 100 constructs the AI integrated model based on the graph network model and the plurality of base models. The AI integrated model may construct a graph structure based on outputs of the plurality of base models, and then process the graph structure by using the graph network model, to fuse outputs of the plurality of base models. Since the graph network model considers neighboring nodes of each node in the graph structure when processing the graph structure, the graph network model fully considers differences and correlations between the base models when fusing the outputs of the plurality of base models. Therefore, when a feature obtained by the AI integrated model constructed based on the graph network model and the plurality of base models is used for executing an AI task, precision of an execution result of the AI task can be improved.

In the embodiment shown in FIG. 4, the management platform 100 may alternatively obtain a plurality of base models in a search manner according to a neural architecture search (neural architecture search, NAS) algorithm. Considering that the NAS algorithm takes a relatively long time, the management platform 100 may further use an optimized NAS algorithm to obtain a plurality of base models through searching.

The optimized NAS algorithm may include any one of an efficient neural architecture search (efficient neural architecture search, ENAS) algorithm, a differentiable architecture search (differentiable architecture search, DARTS) algorithm, a proxyless neural architecture search (proxyless NAS) algorithm, or the like. It should be noted that a base model obtained by using the NAS algorithm or the optimized NAS algorithm is a neural network model.

For ease of understanding, the following uses an example in which the base model is obtained by using the DARTS algorithm for description. FIG. 6A is a schematic flowchart of obtaining a base model according to a DARTS algorithm, which specifically includes the following steps:

S602: A management platform 100 determines a supernet based on a search space.

A principle of the DARTS is to determine a supernet (supernet) based on a search space. The supernet may be represented as a directed acyclic graph. Each node (node) in the directed acyclic graph may represent a feature graph (or a feature vector), and an edge (edge) between nodes represents a possible operation of connecting the nodes, for example, may be 3*3 convolution or 5*5 convolution.

Generally, an operation selection between nodes is discrete, that is, the search space (a set of searchable operations) is discrete. Edges between nodes in the supernet are extended, so that there are more possible operations for connecting the nodes, thereby implementing search space relaxation. Specifically, the management platform 100 may extend the edges in the search space according to possible operations between nodes that are configured by a user, to relax the search space. The management platform 100 may then map the relaxed search space to a continuous space, to obtain the supernet.

S604: The management platform 100 trains the supernet to obtain a base model.

Specifically, a target function is set for the supernet. When the search space is mapped to the continuous space, the target function may be mapped to a differentiable function. In this way, the management platform 100 may perform model optimization in the continuous space by using a gradient descent (gradient descent, GD) method.

A principle of the DARTS is to train a neural cell (cell), for example, a norm-cell and a reduce-cell, in a search manner, and then connect a plurality of cells, to obtain a neural network model. The norm-cell indicates that a size of an output feature graph is the same as that of an input feature graph, and the reduce-cell indicates that a size of an output feature graph is half that of an input feature graph. A quantity of connected cells may be controlled by using a hyperparameter layer. For example, if layer=20, it indicates that 20 cells are connected to obtain a neural network model.

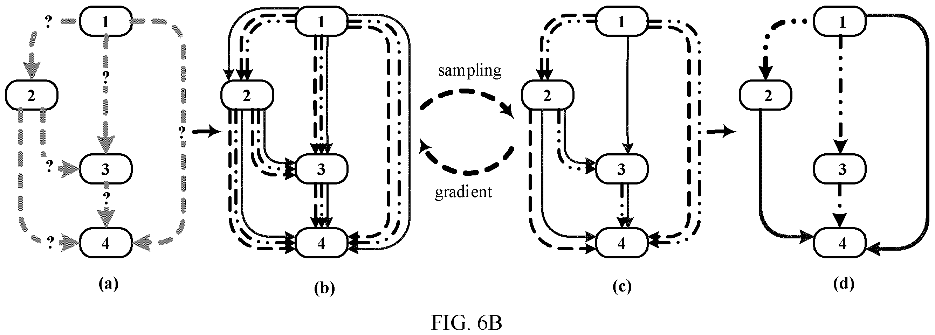

The following describes how to train a cell. FIG. 6B is a schematic flowchart of neural network search. First, refer to (a) in FIG. 6B. A cell is shown in (a). The cell may be represented as a directed acyclic graph. A node 1, a node 2, a node 3, and a node 4 in the directed acyclic graph respectively represent feature graphs. An edge between nodes represents a possible operation of connecting the nodes. Initially, the edge between the nodes is unknown. In response to a configuration operation of the user, the management platform 100 may extend the edge between the nodes to a plurality of edges (a plurality of edges shown by different line types in FIG. 6B). Correspondingly, the possible operation of connecting the nodes is extended to eight possible operations, for example, 3x3 deep separable convolution, 5x5 deep separable convolution, 3x3 hole convolution, 5x5 hole convolution, 3x3 maximum pooling, 3x3 average pooling, identity operation, and direct connection. In this way, the discrete search space may be relaxed, so as to obtain the supernet shown in (b) in FIG. 6B.

The management platform 100 may then perform sampling (sampling) on the supernet to obtain a sub-network (sub-network). Sampling refers to selecting one or more operations from the possible operations of connecting the nodes. After the sub-network is obtained, a gradient (gradient) may be further calculated, and then a parameter of the supernet is updated based on the gradient, to train the supernet. The management platform 100 may perform model optimization by continuously performing the foregoing sampling and update steps. (d) in FIG. 6B shows an optimal sub-network obtained through sampling. The optimal sub-network may be used as a base model.

A key to obtaining the base model by the management platform 100 is sampling. The following describes a sampling process in detail. Parameters that can be learned in the supernet include an operation parameter $\omega$ and a structure parameter $\alpha$. The operation parameter $\omega$ represents an operation of connecting nodes, for example, 3x3 depth separable convolution, 5x5 depth separable convolution, 3x3 hole convolution, 5x5 hole convolution, 3x3 maximum pooling, 3x3 average pooling, identity operation, or direct connection. The structure parameter $\alpha$ is used to represent a weight of an operation of connecting nodes. Based on this, the sampling process may be represented as a two-level optimization problem in which the structure parameter $\alpha$ is an upper-level variable and the operation parameter $\omega$ of the supernet is a lower-level variable. For details, refer to Formula (6):

$$\min_{\alpha} L_{val}(\omega^*(\alpha), \alpha)$$
$$s.t. \ \omega^*(\alpha) = arg \min_{\omega} L_{train}(\omega, \alpha) \tag{6}$$

$L_{train}$ represents a loss on a training dataset, that is, a training loss, and $L_{val}$ represents a loss on a verification dataset, that is, a verification loss. arg represents argument, which is usually used together with a maximum value or a minimum value to indicate an argument that makes an expression maximum or minimum. $\omega^*(\alpha)$ represents $\omega$ that makes $L_{train}(\omega, \alpha)$ minimum. s. t. is an abbreviation of subject to, and is used to indicate a condition to be met or obeyed. Based on this, Formula (6) represents $\alpha$ that makes $\min_{\alpha} L_{val}(\omega^*(\alpha), \alpha)$ minimum when the condition $\omega^*(\alpha) = arg \min_{\omega} L_{train}(\omega, \alpha)$ is met.

To solve the foregoing Formula (6), a possible implementation method is to alternately optimize the foregoing operation parameter $\omega$ and structure parameter $\alpha$. Specifically, the management platform 100 may alternately perform the following steps: (a) updating the structure parameter $\alpha$ based on the verification loss (for example, a gradient $\nabla_{\alpha}L_{val}(\omega - \xi L_{train}(\omega,\alpha),\alpha)$ of the verification loss) by using a gradient descent method; and (b) updating the operation parameter $\omega$ based on the training loss (for example, a gradient $\nabla_{\omega}L_{trai}(\omega,\alpha)$ of the training loss) by using the gradient descent method. $\xi$ represents a learning rate, and $\nabla$ represents a gradient. When performance of a sub-network obtained through the alternate optimization for the verification dataset reaches preset performance, the alternate execution of the foregoing steps may be terminated.

Considering that complexity of the alternate optimization is extremely high, the management platform 100 may alternatively perform optimization through gradient approximation, to reduce the complexity. Specifically, the management platform 100 may substitute $\omega^*(\alpha)$ into the verification loss, and then determine a gradient of $L_{val}(\omega^*(\alpha),\alpha)$ as an approximate value of a gradient of $L_{val}(\omega - \xi L_{train}(\omega,\alpha),\alpha)$. For details, refer to Formula (7):

$$\nabla_{\alpha} L_{val}(\omega^*(\alpha), \alpha) \approx \nabla_{\alpha} L_{val}(\omega - \xi L_{train}(\omega, \alpha), \alpha) \tag{7}$$

This method aims to minimize the loss (that is, the verification loss) on the verification dataset, and uses the gradient descent method to find distribution of an optimal sub-network instead of directly finding the optimal sub-network. In this way, sub-network sampling efficiency is improved. The sub-network obtained by the management platform 100 through sampling may be used as a base model.

The foregoing describes in detail obtaining a base model by performing sampling in a supernet. The management platform 100 may perform sampling in the same manner, to obtain a plurality of base models. Further, considering that a base model may have a poor inference effect on some training data, the management platform 100 may further determine performance of a base model (for example, an ith base model, where i is a positive integer) after obtaining the base model, for example, performance of the base model for different types of training data. The performance may be measured by using an indicator such as precision or inference time, which is not limited in this embodiment. The following describes in detail a process of obtaining a plurality of base models.

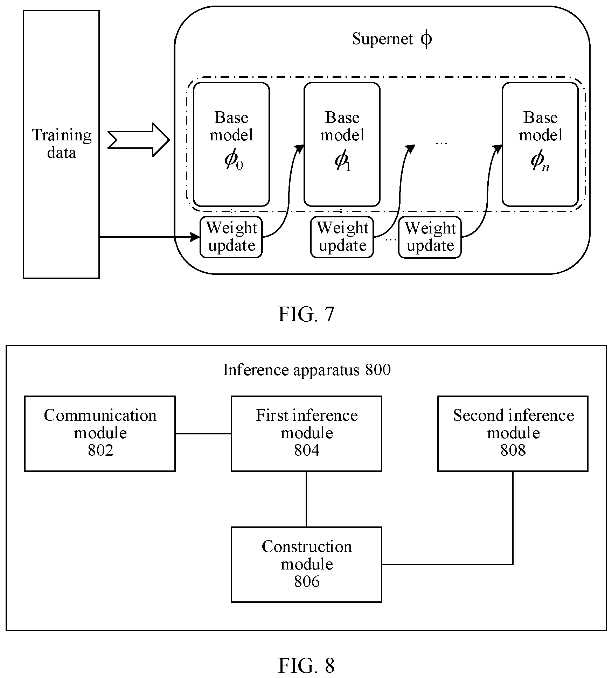

Refer to a schematic flowchart of obtaining a plurality of base models shown in FIG. 7. The following steps are specifically included.

Step 1: A management platform 100 determines a supernet based on a search space.

Step 2: The management platform 100 trains the supernet to obtain a base model.

For implementation of determining, by the management platform 100, the supernet, training the supernet, and obtaining the base model, refer to related content descriptions in FIG. 6A and FIG. 6B. In this embodiment, it is assumed that the first base model obtained by the management platform 100 is $\phi_0$.

Step 3: The management platform 100 determines performance of the base model.

Performance of the base model may be measured by precision of an execution result of an AI task that is obtained by using the base model. Specifically, the management platform 100 may input training data used for precision evaluation into the base model, perform classification based on a feature extracted from the base model, and then determine, based on a classification result and a label of the training data, training data that is incorrectly classified and training data that is correctly classified. The management platform 100 may obtain the precision of the base model based on an amount of training data that is incorrectly classified and an amount of training data that is correctly classified in training data of each type.

It should be noted that after the base model is obtained through sampling, the management platform 100 may further first train the base model for K rounds, and then determine performance of the base model. K is a positive integer.

Further, the management platform 100 may further determine whether the performance of the base model reaches preset performance. If yes, sampling may be directly stopped, and a corresponding AI task is directly completed based on the base model. If no, steps 4 and 5 may be performed, to continue to perform sampling to obtain a next base model.

Step 4: The management platform 100 may update a weight of training data based on the performance of the base model.

Specifically, when performance of the base model for second-type training data is higher than performance of the base model for first-type training data, the management platform 100 may increase a weight of the first-type training data in a training dataset, and/or reduce a weight of the second-type training data in the training dataset. In this way, there is a relatively high probability that the first-type training data is used to train the supernet, and there is a relatively low probability that the second-type training data is used to train the supernet.

The management platform 100 updates the weight of the training data in a plurality of implementations. The following uses two implementations as examples for description.

In a first implementation, the management platform 100 may update the weight of the training data based on a linear function. The linear function is specifically a function that represents a linear relationship between a weight of training data and performance of a base model. The management platform 100 may further normalize the weight. For example, the management platform 100 may set a sum of weights of different types of training data to 1.

In a second implementation, the management platform 100 may update the weight of the training data by using an Adaboost method. For details, refer to Formula (8):

$$\beta_i = \frac{1}{2} ln \frac{1 - E_i}{E_i}$$

$$W_{i+1}(j) \leftarrow \frac{W_i(j)}{Z_i} \times \begin{cases} e^{-\beta_i}, & if\ h_i(x^j) = y_j \\ e^{\beta_i}, & if\ h_i(x^j) \neq y_j \end{cases} \tag{8}$$

$E_i$ represents an error rate of a base model $\phi_i$, $\beta_i$ represents a coefficient of the base model $\phi_i$, $W_i(j)$ is a weight of training data $x^j$ used to train a current base model (for example, the base model $\phi_i$), and $W_{i+1}(j)$ is a weight of training data $x^j$ used to train a next base model (for example, a base model $\phi_{i+1}$). $Z_i$ is a normalization coefficient, to enable $W_i(j)$ to represent a distribution. $h_i(\blacksquare)$ is an inference result of the base model $\phi_i$, and $y_j$ is a label in sample data.

Specifically, a training platform 102 may obtain an error rate $E_i$ of the base model $\phi_i$, for example, may determine the error rate of the base model $\phi_i$ based on precision of the base model $\phi_i$. Then, the training platform 102 calculates the coefficient $\beta_i$ of the base model based on the error rate $E_i$ of the base model $\phi_i$. Then, the training platform 102 adjusts the weight based on whether a result $h_i(x^j)$ of predicting the sample data $x^j$ by the base model $\phi_i$ is equal to the label $y_j$ in the sample data. For example, when $h_i(x^j)=y_j$, the training platform 102 may multiply $W_i(j)$ by $\frac{e^{-\beta_i}}{Z_i}$, to obtain an updated weight $W_{i+1}(j)$; or when $h_i(x^j) \neq y_j$, the training platform 102 may multiply $W_i(j)$ by $\frac{e^{\beta_i}}{Z_i}$, to obtain an updated weight $W_{i+1}(j)$.

Step 5: The management platform 100 trains the supernet by using the training data with an updated weight, and obtains a next base model from the supernet through sampling.

After the weight of the training data is updated, there is a relatively high probability that training data with a high weight is selected for training the supernet, to obtain a base model, and there is a relatively low probability that training data with a low weight is selected for training the supernet. In this way, the supernet may focus on training based on training data with a high weight, and a base model obtained through sampling in the training process has relatively good performance for this type of training data. Therefore, a plurality of base models obtained by the management platform 100 in the supernet training process can implement performance complementation, and precision of an execution result of an AI task that is obtained based on an AI integrated model integrated with the plurality of base models can be significantly improved.

Further, when training the supernet by using the training data with the updated weight to obtain a next base model, the management platform 100 may train the original supernet based on the training data with the updated weight, or may fine tune (fine tune) the supernet based on the training data with the updated weight. Fine tuning refers to slightly adjusting the pre-trained model. Specifically, in this embodiment, the management platform 100 may retrain the trained supernet based on the training data with the updated weight, without a need to train the supernet from the beginning, thereby implementing fine tuning of the supernet, and reducing training complexity.

When a quantity of the base models is greater than or equal to 2, and none of performance of the base models reaches the preset performance, the management platform 100 may train an initial graph network model based on the training dataset and the obtained plurality of base models, to obtain a graph network model. Then, the management platform 100 determines whether performance of the graph network model reaches preset performance. If yes, the management platform 100 may stop training, and construct an AI integrated model based on the graph network model and the plurality of base models. If no, the management platform 100 may continue to sample a new base model, and when performance of the new base model does not reach the preset performance, perform training based on the training dataset and a plurality of base models including the new base model, to obtain a graph network model.

The method for constructing an AI integrated model is described in detail in the embodiments shown in FIG. 1 to FIG. 7. The AI integrated model constructed by using the foregoing method may be used to perform inference on input data, to implement an AI task. The following describes an AI integrated model inference method.

The AI integrated model inference method may be executed by an inference apparatus. The inference apparatus may be a software apparatus. The software apparatus may be deployed in a computing device or a computing device cluster. The computing device cluster runs the software apparatus, to perform the AI integrated model inference method provided in embodiments of this application. In some embodiments, the inference apparatus may alternatively be a hardware apparatus. When running, the hardware apparatus performs the AI integrated model inference method provided in embodiments of this application. For ease of understanding, the following uses an example in which the inference apparatus is a software apparatus for description.

Refer to a schematic diagram of a structure of an inference apparatus shown in FIG. 8. The apparatus 800 includes a communication module 802, a first inference module 804, a construction module 806, and a second inference module 808. The communication module 802 is configured to obtain input data. The first inference module 804 is configured to input the input data into each base model, to obtain an output obtained after each base model performs inference on the input data. The construction module 806 is configured to construct a graph structure by using outputs of the plurality of base models. The second inference module 808 is configured to input the graph structure into a graph network model, and obtain an inference result of the AI integrated model based on the graph network model.

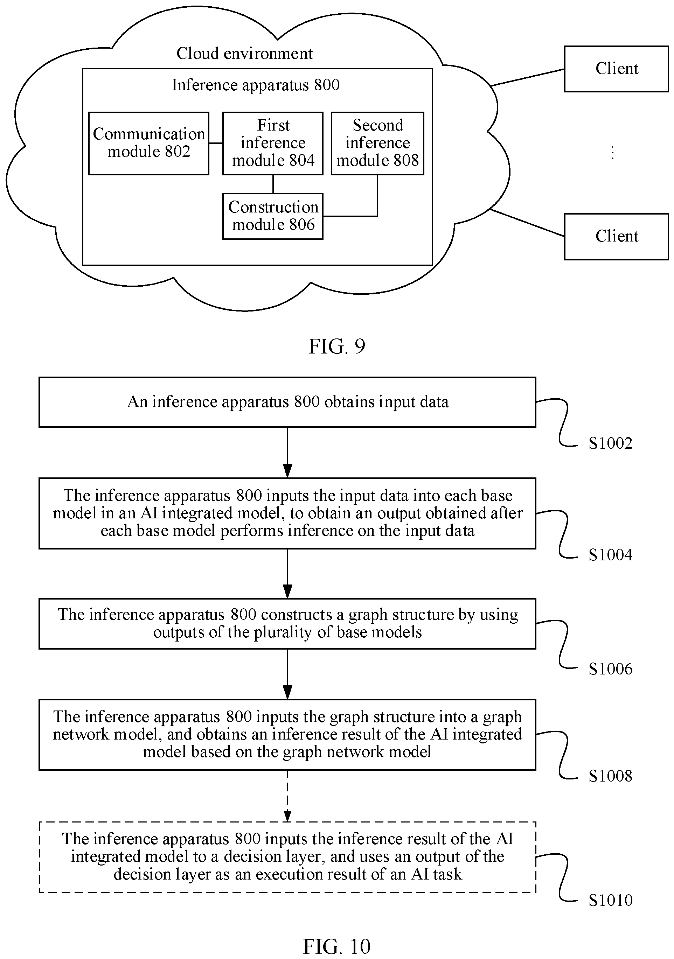

In some possible implementations, as shown in FIG. 9, the inference apparatus 800 may be deployed in a cloud environment. In this way, the inference apparatus 800 may provide an inference cloud service to a user for use. Specifically, the user may trigger, by using a client (for example, a browser or a dedicated client), an operation of starting the inference apparatus 800, to create an instance of the inference apparatus 800 in a cloud environment. Then, the user interacts with the instance of the inference apparatus 800 by using the client, to execute the AI integrated model inference method. Similarly, the inference apparatus 800 may alternatively be deployed in an edge environment, or may be deployed in a user terminal such as a desktop computer, a notebook computer, or a smartphone.

In some other possible implementations, the inference apparatus 800 may alternatively be deployed in different environments in a distributed manner. For example, the modules of the inference apparatus 800 may be deployed in any two environments of a cloud environment, an edge environment, and a terminal device or deployed in the foregoing three environments in a distributed manner.

The following describes in detail, from a perspective of the inference apparatus 800, the AI integrated model inference method provided in embodiments of this application.

Refer to a flowchart of an AI integrated model inference method shown in FIG. 10. The method includes the following steps.

S 1002: An inference apparatus 800 obtains input data.

Specifically, the inference apparatus 800 includes an AI integrated model. Different AI integrated models can be constructed based on different training data. Different AI integrated models can be used to complete different AI tasks. For example, training data labeled with a category of an image may be used to construct an AI integrated model for classifying images, and training data labeled with a translation statement may be used to construct an AI integrated model for translating a text.

The inference apparatus 800 may receive input data uploaded by a user, or obtain input data from a data source. The input data received by the inference apparatus 800 may be of different types based on different AI tasks. For example, the AI task is an image classification task. The input data received by the inference apparatus 800 may be a to-be-classified image. An objective of the AI task is to classify the image. An execution result of the AI task may be a category of the image.

S 1004: The inference apparatus 800 inputs the input data into each base model in the AI integrated model, to obtain an output obtained after each base model performs inference on the input data.

Each base model is a trained AI model. The base model may be a trained random forest model, decision tree model, or the like; or may be a neural network model obtained by sampling from a supernet. The inference apparatus 800 inputs the input data into each base model, and each base model may extract a feature from the input data, to obtain an output obtained after each base model performs inference on the input data.

The image classification task is still used as an example for description. The inference apparatus 800 inputs the to-be-classified image into each base model in the AI integrated model, to obtain an output obtained after each base model performs inference on the to-be-classified image. The output obtained after each base model performs inference on the to-be-classified image is a feature extracted by each base model from the to-be-classified image.

S1006: The inference apparatus 800 constructs a graph structure by using outputs of the plurality of base models.

Specifically, the inference apparatus 800 may determine a similarity between outputs of every two of the plurality of base models. The outputs of the plurality of base models may be represented by features. Therefore, the similarity between outputs of every two base models may be represented by a distance between features. The inference apparatus 800 may use the output of each of the plurality of base models as a node of the graph structure, determine an edge between nodes based on the similarity between outputs of every two base models, and then construct the graph structure based on the nodes and the edges.

The inference apparatus 800 may set a similarity threshold. In some possible implementations, when a distance between two features is greater than the similarity threshold, it may be determined that an edge is included between nodes corresponding to the two features; or when a distance between two features is less than or equal to the similarity threshold, it may be determined that no edge is included between nodes corresponding to the two features. In some other possible implementations, the inference apparatus 800 may alternatively set that an edge is included between any two nodes, and then assign a weight to a corresponding edge based on a distance between features.

S1008: The inference apparatus 800 inputs the graph structure into the graph network model, and obtains an inference result of the AI integrated model based on the graph network model.

The inference apparatus 800 inputs the constructed graph structure into the graph network model. The graph network model may process the graph structure, for example, perform convolution processing on the graph structure by using a graph convolution network model, to obtain an inference result of the AI integrated model. The inference result of the AI integrated model may be a feature of the input data, and the feature is specifically a fused feature obtained by fusing, by the graph network model, features extracted by the plurality of base models.

In the example of the image classification task, the inference apparatus 800 constructs the graph structure based on the feature extracted by each base model from the to-be-classified image, and then inputs the graph structure into the graph network model, to obtain the inference result of the AI integrated model. The inference result may be the fused feature obtained by fusing, by the graph network model in the AI integrated model, the features extracted by the plurality of base models.

S1010: The inference apparatus 800 inputs the inference result of the AI integrated model to a decision layer, and uses an output of the decision layer as an execution result of the AI task.

Different types of decision layers may be used for different AI tasks. For example, for a classification task, the decision layer may be a classifier; and for a regression task, the decision layer may be a regression device. The inference apparatus 800 may input the inference result (for example, the fused feature) of the AI integrated model to the decision layer for decision-making, and use the output of the decision layer as the execution result of the AI task.

The example in which the AI task is the image classification task is still used for description. The inference apparatus 800 may input the fused feature into the classifier for classification, to obtain an image category. The image category is an execution result of the classification task.

It should be noted that the AI integrated model may be further used to preprocess the input data, and an inference result of the AI integrated model is used as a preprocessing result. The inference apparatus 800 may input the inference result of the AI integrated model to a downstream task model. The task model is an AI model trained for a specific AI task. The inference apparatus 800 may further extract a feature from the inference result by using the task model, make a decision based on the feature obtained after the further feature extraction, and use a result obtained through the decision as an execution result of the AI task.

In actual application, the inference apparatus 800 may further present the execution result of the AI task to the user, so that the user takes a corresponding measure or performs a corresponding action based on the execution result. This is not limited in embodiments of this application.

Based on the foregoing descriptions, embodiments of this application provide an AI integrated model inference method. In the method, the inference apparatus 800 inputs the input data into the plurality of base models, constructs the graph structure by using the outputs of the plurality of base models, and then processes the graph structure by using the graph network model, to fuse the outputs of the plurality of base models. Since the graph network model considers neighboring nodes of each node in the graph structure when processing the graph structure, the graph network model fully considers differences and correlations between the base models when fusing the outputs of the plurality of base models. Therefore, precision of the execution result of the AI task that is obtained based on the AI integrated model constructed by using the graph network model and the plurality of base models can be significantly improved.

The foregoing describes in detail the AI integrated model inference method provided in embodiments of this application with reference to FIG. 1 to FIG. 10. The following describes an apparatus and a device provided in embodiments of this application with reference to the accompanying drawings.

Refer to the schematic diagram of the structure of the AI integrated model management platform 100 shown in FIG. 1. The management platform 100 (that is, the management system) includes:

an interaction unit 102, configured to obtain a training dataset, an initial graph network model, and a plurality of base models, where each base model is a trained AI model;
a training unit 104, configured to iteratively train the initial graph network model by using training data in the training dataset and the plurality of base models, to obtain a graph network model; and
a construction unit 106, configured to construct the AI integrated model based on the graph network model and the plurality of base models, where an input of the graph network model is a graph structure consisting of outputs of the plurality of base models.

In some possible implementations, in a process in which the training unit 104 iteratively trains the initial graph network model by using training data in the training dataset and the plurality of base models, each iteration includes:

inputting first training data in the training dataset into each base model, to obtain an output obtained after each base model performs inference on the first training data;
constructing a graph structure by using outputs obtained after the plurality of base models perform inference on the first training data; and
training the initial graph network model by using the graph structure.

In some possible implementations, the plurality of base models include one or more of the following types of AI models: a decision tree model, a random forest model, and a neural network model.

In some possible implementations, the interaction unit 102 is specifically configured to:
train a supernet by using the training unit, to obtain the plurality of base models from the supernet.

In some possible implementations, the training unit 104 is specifically configured to:

train the supernet by using training data in the training dataset, to obtain an $i^{th}$ base model, where i is a positive integer;
update a weight of the training data in the training dataset based on performance of the $i^{th}$ base model; and
train the supernet by using the training data with an updated weight in the training dataset, to obtain an $(i+1)^{th}$ base model.

In some possible implementations, the training unit 104 is specifically configured to:
when performance of the $i^{th}$ base model for second-type training data is higher than performance of the $i^{th}$ base model for first-type training data, increase a weight of the first-type training data in the training dataset, and/or reduce a weight of the second-type training data in the training dataset.

In some possible implementations, the training unit 104 is specifically configured to:
fine tune the supernet by using the training data with the updated weight.

In some possible implementations, the training unit 104 is specifically configured to:

determine a similarity between outputs obtained after every two of the plurality of base models perform inference on the first training data; and
use an output obtained after each of the plurality of base models performs inference on the first training data as a node of the graph structure, determine an edge between the nodes based on the similarity, and obtain the graph structure based on the nodes and the edges.

In some possible implementations, the graph network model includes any one of a graph convolution network model, a graph attention network model, a graph autoencoder model, a graph generative network model, or a graph spatial-temporal network model.

In some possible implementations, the graph convolution network model includes a graph convolution network model obtained by simplifying ChebNet.

The management platform 100 according to embodiments of this application may correspondingly perform the methods described in embodiments of this application, and the foregoing and other operations and/or functions of the modules/units of the management platform 100 are respectively used to implement corresponding procedures of the methods in the embodiment shown in FIG. 4. For brevity, details are not described herein again.

Then, refer to a schematic diagram of a structure of an AI integrated model inference apparatus 800 shown in FIG. 8. The inference apparatus 800 includes:

a communication module 802, configured to obtain input data;

a first inference module 804, configured to input the input data into each base model in the AI integrated model, to obtain an output obtained after each base model performs inference on the input data, where each base model is a trained AI model;

a construction module 806, configured to construct a graph structure by using outputs of the plurality of base models; and

a second inference module 808, configured to input the graph structure into the graph network model, and obtain an inference result of the AI integrated model based on the graph network model.

In some possible implementations, the construction module 806 is specifically configured to:

determine a similarity between outputs of every two of the plurality of base models; and

use the output of each of the plurality of base models as a node of the graph structure, determine an edge between the nodes based on the similarity, and obtain the graph structure based on the nodes and the edges.

In some possible implementations, the inference result of the AI integrated model is a feature of the input data.

In some possible implementations, the apparatus 800 further includes:

an execution module, configured to input the inference result of the AI integrated model into a decision layer, and use an output of the decision layer as an execution result of an AI task.

In some possible implementations, the apparatus 800 further includes:

an execution module, configured to input the inference result of the AI integrated model into a task model, perform further feature extraction on the inference result by using the task model, make a decision based on a feature obtained after the further feature extraction, and use a result obtained through the decision as an execution result of an AI task, where the task model is an AI model that is trained for the AI task.

The inference apparatus 800 according to this embodiment of this application may correspondingly perform the method described in the embodiment of this application, and the foregoing and other operations and/or functions of the modules/units of the inference apparatus 800 are respectively used to implement corresponding procedures of the methods in the embodiment shown in FIG. 10. For brevity, details are not described herein again.

An embodiment of this application further provides a computing device cluster. The computing device cluster may be a computing device cluster formed by at least one computing device in a cloud environment, an edge environment, or a terminal device. The computing device cluster is specifically configured to implement a function of the management platform 100 in the embodiment shown in FIG. 1.

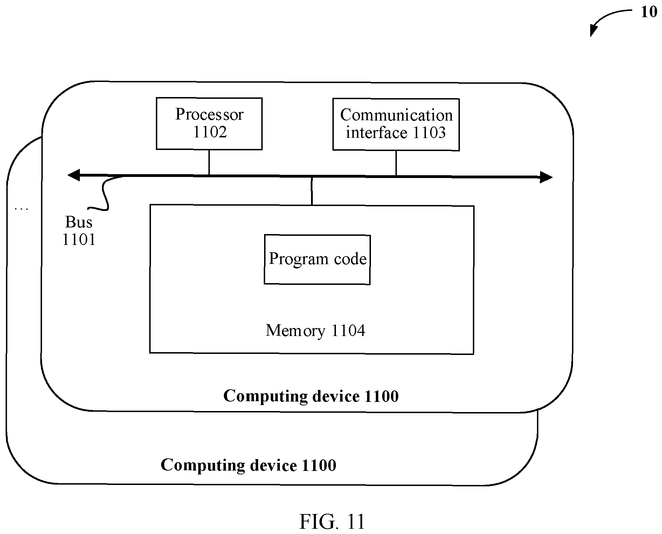

FIG. 11 provides a schematic diagram of a structure of a computing device cluster. As shown in FIG. 11, the computing device cluster 10 includes a plurality of computing devices 1100, and the computing device 1100 includes a bus 1101, a processor 1102, a communication interface 1103, and a memory 1104. The processor 1102, the memory 1104, and the communication interface 1103 communicate with each other by using the bus 1101.

The bus 1101 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one bold line is used to represent the bus in FIG. 11, but this does not mean that there is only one bus or only one type of bus.

The processor 1102 may be any one or more of processors such as a central processing unit (central processing unit, CPU), a graphics processing unit (graphics processing unit, GPU), a microprocessor (micro processor, MP), or a digital signal processor (digital signal processor, DSP).

The communication interface 1103 is configured to communicate with the outside. For example, the communication interface 1103 may be configured to obtain a training dataset, an initial graph network model, and a plurality of base models; or the communication interface 1103 is configured to output an AI integrated model constructed based on a plurality of base models; or the like.

The memory 1104 may include a volatile memory (volatile memory), for example, a random access memory (random access memory, RAM). The memory 1104 may further include a non-volatile memory (non-volatile memory), for example, a read-only memory (read-only memory, ROM), a flash memory, a hard disk drive (hard disk drive, HDD), or a solid state drive (solid state drive, SSD).

The memory 1104 stores executable code, and the processor 1102 executes the executable code to perform the foregoing method for constructing an AI integrated model.

Specifically, in a case in which the embodiment shown in FIG. 1 is implemented, and functions of parts of the management platform 100 described in the embodiment in FIG. 1 such as the interaction unit 102, the training unit 104, and the construction unit 106 are implemented by using software, software or program code required for executing the functions in FIG. 1 may be stored in at least one memory 1104 in the computing device cluster 10. The at least one processor 1102 executes the program code stored in the memory 1104, so that the computing device cluster 1100 performs the foregoing method for constructing an AI integrated model.

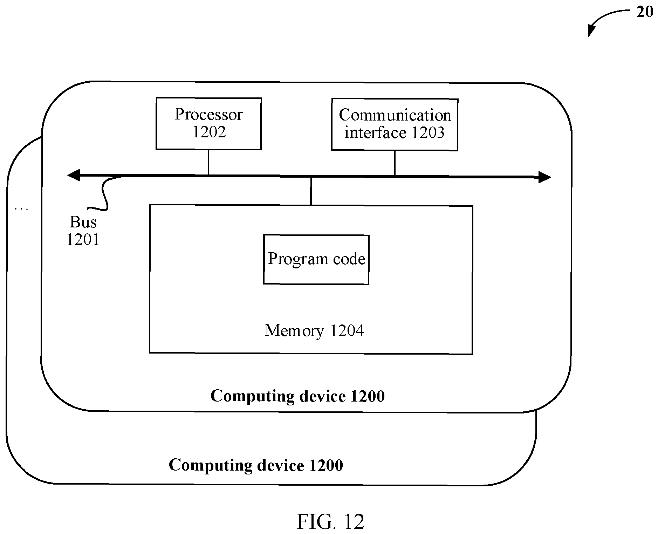

FIG. 12 provides a schematic diagram of a structure of a computing device cluster. As shown in FIG. 12, the computing device cluster 20 includes a plurality of computing devices 1200, and the computing device 1200 includes a bus 1201, a processor 1202, a communication interface 1203, and a memory 1204. The processor 1202, the memory 1204, and the communication interface 1203 communicate with each other by using the bus 1201.

For specific implementations of the bus 1201, the processor 1202, the communication interface 1203, and the memory 1204, refer to related content descriptions in FIG. 11. At least one memory 1204 in the computing device cluster 20 stores executable code, and the at least one processor 1202 executes the executable code to perform the foregoing AI integrated model inference method.

Embodiments of this application further provide a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct the computing device to perform the foregoing method for constructing an AI integrated model applied to the management platform 100, or instruct the computing device to perform the foregoing inference method applied to the inference apparatus 800.

Embodiments of this application further provide a computer program product. The computer program product includes one or more computer instructions. When the computer instructions are loaded and executed on a computing device, all or some of the procedures or functions according to embodiments of this application are generated.

The computer instructions may be stored in a computer-readable storage medium or may be transmitted from a computer-readable storage medium to another computer-readable storage medium. For example, the computer instructions may be transmitted from a website, computer, or data center to another website, computer, or data center in a wired (for example, a coaxial cable, an optical fiber, or a digital subscriber line (DSL)) or wireless (for example, infrared, radio, or microwave) manner.

The computer program product may be a software installation package. When either of the foregoing method for constructing an AI integrated model or the foregoing AI integrated model inference method needs to be used, the computer program product may be downloaded and executed on a computing device.

Descriptions of procedures or structures corresponding to the foregoing accompanying drawings have respective focuses. For a part that is not described in detail in a procedure or structure, refer to related descriptions of other procedures or structures.

**Claims**

1. A method for constructing an artificial intelligence AI integrated model, comprising:

   obtaining a training dataset, an initial graph network model, and a plurality of base models, wherein each base model is a trained AI model;
   iteratively training the initial graph network model by using training data in the training dataset and the plurality of base models, to obtain a graph network model; and
   constructing the AI integrated model based on the graph network model and the plurality of base models, wherein an input of the graph network model is a graph structure consisting of outputs of the plurality of base models.

2. The method according to claim 1, wherein in a process of iteratively training the initial graph network model by using training data in the training dataset and the plurality of base models, each iteration comprises:

   inputting first training data in the training dataset into each base model, to obtain an output obtained after each base model performs inference on the first training data;
   constructing a graph structure by using outputs obtained after the plurality of base models perform inference on the first training data; and
   training the initial graph network model by using the graph structure.

3. The method according to claim 1 or 2, wherein the plurality of base models comprise one or more of the following types of AI models: a decision tree model, a random forest model, and a neural network model.

4. The method according to claim 1 or 2, wherein the obtaining a plurality of base models comprises:
   training a supernet to obtain the plurality of base models from the supernet.

**5.** The method according to claim 4, wherein the training a supernet to obtain the plurality of base models from the supernet comprises:

training the supernet by using training data in the training dataset, to obtain an $i^{th}$ base model, wherein i is a positive integer;
updating a weight of the training data in the training dataset based on performance of the $i^{th}$ base model; and
training the supernet by using the training data with an updated weight in the training dataset, to obtain an $(i+1)^{th}$ base model.

**6.** The method according to claim 5, wherein the updating a weight of the training data in the training dataset based on performance of the $i^{th}$ base model comprises:
when performance of the $i^{th}$ base model for second-type training data is higher than performance of the $i^{th}$ base model for first-type training data, increasing a weight of the first-type training data in the training dataset, and/or reducing a weight of the second-type training data in the training dataset.

**7.** The method according to claim 5, wherein the training the supernet by using the training data with an updated weight comprises:
fine tuning the supernet by using the training data with the updated weight.

**8.** The method according to claim 2, wherein the constructing a graph structure by using outputs obtained after the plurality of base models perform inference on the first training data comprises:

determining a similarity between outputs obtained after every two of the plurality of base models perform inference on the first training data; and
using an output obtained after each of the plurality of base models performs inference on the first training data as a node of the graph structure, determining an edge between the nodes based on the similarity, and obtaining the graph structure based on the nodes and the edges.

**9.** The method according to claim 1 or 2, wherein the graph network model comprises any one of the following models: a graph convolution network model, a graph attention network model, a graph automatic encoder model, a graph generation network model, or a graph spatial-temporal network model.

**10.** The method according to claim 9, wherein when the graph network model is a graph convolution network model, the graph convolution network model is a graph convolution network model obtained by simplifying ChebNet.

**11.** An artificial intelligence AI integrated model inference method, wherein the method is applied to an inference apparatus, the AI integrated model comprises a graph network model and a plurality of base models, and the method comprises:

obtaining input data;
inputting the input data into each base model in the AI integrated model, to obtain an output obtained after each base model performs inference on the input data, wherein each base model is a trained AI model;
constructing a graph structure by using outputs of the plurality of base models; and
inputting the graph structure into the graph network model, and obtaining an inference result of the AI integrated model based on the graph network model.

**12.** The method according to claim 11, wherein the constructing a graph structure by using outputs of the plurality of base models comprises:

determining a similarity between outputs of every two of the plurality of base models; and
using the output of each of the plurality of base models as a node of the graph structure, determining an edge between the nodes based on the similarity, and obtaining the graph structure based on the nodes and the edges.

**13.** The method according to claim 11 or 12, wherein the inference result of the AI integrated model is a feature of the input data.

**14.** The method according to claim 13, wherein the method further comprises:
inputting the inference result of the AI integrated model into a decision layer, and using an output of the decision layer as an execution result of an AI task.

15. The method according to claim 13, wherein the method further comprises:
inputting the inference result of the AI integrated model into a task model, performing further feature extraction on the inference result by using the task model, making a decision based on a feature obtained after the further feature extraction, and using a result obtained through the decision as an execution result of an AI task, wherein the task model is an AI model that is trained for the AI task.

16. An artificial intelligence AI integrated model management system, wherein the platform comprises:

an interaction unit, configured to obtain a training dataset, an initial graph network model, and a plurality of base models, wherein each base model is a trained AI model;
a training unit, configured to iteratively train the initial graph network model by using training data in the training dataset and the plurality of base models, to obtain a graph network model; and
a construction unit, configured to construct the AI integrated model based on the graph network model and the plurality of base models, wherein an input of the graph network model is a graph structure consisting of outputs of the plurality of base models.

17. The system according to claim 16, wherein in a process in which the training unit iteratively trains the initial graph network model by using training data in the training dataset and the plurality of base models, each iteration comprises:

inputting first training data in the training dataset into each base model, to obtain an output obtained after each base model performs inference on the first training data;
constructing a graph structure by using outputs obtained after the plurality of base models perform inference on the first training data; and
training the initial graph network model by using the graph structure.

18. The system according to claim 16 or 17, wherein the plurality of base models comprise one or more of the following types of AI models: a decision tree model, a random forest model, and a neural network model.

19. The system according to claim 16 or 17, wherein the interaction unit is specifically configured to:
train a supernet by using the training unit, to obtain the plurality of base models from the supernet.

20. The system according to claim 19, wherein the training unit is specifically configured to:

train the supernet by using training data in the training dataset, to obtain an $i^{th}$ base model, wherein i is a positive integer;
update a weight of the training data in the training dataset based on performance of the $i^{th}$ base model; and
train the supernet by using the training data with an updated weight in the training dataset, to obtain an $(i+1)^{th}$ base model.

21. The system according to claim 20, wherein the training unit is specifically configured to:
when performance of the $i^{th}$ base model for second-type training data is higher than performance of the $i^{th}$ base model for first-type training data, increase a weight of the first-type training data in the training dataset, and/or reduce a weight of the second-type training data in the training dataset.

22. The system according to claim 20, wherein the training unit is specifically configured to:
fine tune the supernet by using the training data with the updated weight.

23. The system according to claim 17, wherein the training unit is specifically configured to:

determine a similarity between outputs obtained after every two of the plurality of base models perform inference on the first training data; and
use an output obtained after each of the plurality of base models performs inference on the first training data as a node of the graph structure, determine an edge between the nodes based on the similarity, and obtain the graph structure based on the nodes and the edges.

24. The system according to claim 16 or 17, wherein the graph network model comprises any one of the following models: a graph convolution network model, a graph attention network model, a graph automatic encoder model, a graph generation network model, or a graph spatial-temporal network model.

25. The system according to claim 24, wherein when the graph network model is a graph convolution network model, the graph convolution network model is a graph convolution network model obtained by simplifying ChebNet.

26. An artificial intelligence AI integrated model inference apparatus, wherein the AI integrated model comprises a graph network model and a plurality of base models, and the apparatus comprises:

a communication module, configured to obtain input data;
a first inference module, configured to input the input data into each base model in the AI integrated model, to obtain an output obtained after each base model performs inference on the input data, wherein each base model is a trained AI model;
a construction module, configured to construct a graph structure by using outputs of the plurality of base models; and
a second inference module, configured to input the graph structure into the graph network model, and obtain an inference result of the AI integrated model based on the graph network model.

27. The apparatus according to claim 26, wherein the construction module is specifically configured to:

determine a similarity between outputs of every two of the plurality of base models; and
use the output of each of the plurality of base models as a node of the graph structure, determine an edge between the nodes based on the similarity, and obtain the graph structure based on the nodes and the edges.

28. The apparatus according to claim 26 or 27, wherein the inference result of the AI integrated model is a feature of the input data.

29. The apparatus according to claim 28, wherein the apparatus further comprises:
an execution module, configured to input the inference result of the AI integrated model into a decision layer, and use an output of the decision layer as an execution result of an AI task.

30. The apparatus according to claim 28, wherein the apparatus further comprises:
an execution module, configured to input the inference result of the AI integrated model into a task model, perform further feature extraction on the inference result by using the task model, make a decision based on a feature obtained after the further feature extraction, and use a result obtained through the decision as an execution result of an AI task, wherein the task model is an AI model that is trained for the AI task.

31. A computing device cluster, wherein the computing device cluster comprises at least one computing device, the at least one computing device comprises at least one processor and at least one memory, the at least one memory stores computer-readable instructions, and the at least one processor reads and executes the computer-readable instructions, so that the computing device cluster performs the method according to any one of claims 1 to 10.

32. A computing device cluster, wherein the computing device cluster comprises at least one computing device, the at least one computing device comprises at least one processor and at least one memory, the at least one memory stores computer-readable instructions, and the at least one processor executes the computer-readable instructions, so that the computing device cluster performs the method according to any one of claims 11 to 15.

33. A computer-readable storage medium, comprising computer-readable instructions, wherein when the computer-readable instructions are run on a computing device or a computing device cluster, the computing device or the computing device cluster is enabled to perform the method according to any one of claims 1 to 15.

34. A computer program product, comprising computer-readable instructions, wherein when the computer-readable instructions are run on a computing device or a computing device cluster, the computing device or the computing device cluster is enabled to perform the method according to any one of claims 1 to 15.

**AI integrated model
management platform 100**

Interaction unit 102

Training dataset

Base
model 1   ...   Base
model N   Initial graph
network model

Training unit 104

Construction unit 106

FIG. 1

Cloud environment

AI integrated model
management platform 100

Interaction unit 102

Training unit
104   Construction
unit 106

Client

⋮

Client

FIG. 2A

FIG. 2B

FIG. 3

A management platform 100 obtains a training dataset ⌇ S402

The management platform 100 obtains an initial graph network model ⌇ S404

The management platform 100 obtains a plurality of base models ⌇ S406

The management platform 100 iteratively trains the initial graph network model by using training data in the training dataset and the plurality of base models, to obtain a graph network model ⌇ S408

The management platform 100 constructs an AI integrated model based on the graph network model and the plurality of base models ⌇ S410

FIG. 4

Graph convolution layer

Feature graph

Input

Multi-dimensional feature

FIG. 5

A management platform 100 determines a supernet based on a search space ⌇ S602

The management platform 100 trains the supernet to obtain a base model ⌇ S604

FIG. 6A

FIG. 6B

FIG. 7

FIG. 8

Cloud environment

Inference apparatus 800

| Communication module 802 | First inference module 804 | Second inference module 808 |

Construction module 806

Client

⋮

Client

FIG. 9

An inference apparatus 800 obtains input data

S1002

The inference apparatus 800 inputs the input data into each base model in an AI integrated model, to obtain an output obtained after each base model performs inference on the input data

S1004

The inference apparatus 800 constructs a graph structure by using outputs of the plurality of base models

S1006

The inference apparatus 800 inputs the graph structure into a graph network model, and obtains an inference result of the AI integrated model based on the graph network model

S1008

The inference apparatus 800 inputs the inference result of the AI integrated model to a decision layer, and uses an output of the decision layer as an execution result of an AI task

S1010

FIG. 10

FIG. 11

20

Processor
1202

Communication
interface 1203

...

Bus
1201

Program code

Memory 1204

**Computing device 1200**

**Computing device 1200**

FIG. 12

| INTERNATIONAL SEARCH REPORT | International application No. |
|---|---|
| | **PCT/CN2021/142269** |

**A. CLASSIFICATION OF SUBJECT MATTER**

G06K 9/62(2022.01)i

According to International Patent Classification (IPC) or to both national classification and IPC

**B. FIELDS SEARCHED**

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 人工智能, 初始, 图网络模型, 基模型, 训练, 迭代, 结构, artificial w intelligence, AI, initial, graph, model, base, train, iterative, structure

**C. DOCUMENTS CONSIDERED TO BE RELEVANT**

| Category* | Citation of document, with indication, where appropriate, of the relevant passages | Relevant to claim No. |
|---|---|---|
| Y | CN 111459168 A (SHANGHAI JIAO TONG UNIVERSITY) 28 July 2020 (2020-07-28) description, paragraphs 9-81 | 1-34 |
| Y | CN 111738414 A (BEIJING BAIDU NETCOM SCIENCE AND TECHNOLOGY CO., LTD.) 02 October 2020 (2020-10-02) description, paragraphs 40-71 | 1-34 |
| Y | CN 109614777 A (THE 4th PARADIGM (BEIJING) TECHNOLOGY CO., LTD.) 12 April 2019 (2019-04-12) description, paragraphs 110-162 | 1-34 |
| A | CN 112163620 A (KUNMING UNIVERSITY OF SCIENCE AND TECHNOLOGY) 01 January 2021 (2021-01-01) entire document | 1-34 |
| A | US 2012084235 A1 (MASSACHUSETTS INSTITUTE OF TECHNOLOGY et al.) 05 April 2012 (2012-04-05) entire document | 1-34 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 March 2022** | **29 March 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/142269**

| Patent document cited in search report | | | Publication date (day/month/year) | Patent family member(s) | | | Publication date (day/month/year) |
|---|---|---|---|---|---|---|---|
| CN | 111459168 | A | 28 July 2020 | None | | | |
| CN | 111738414 | A | 02 October 2020 | None | | | |
| CN | 109614777 | A | 12 April 2019 | None | | | |
| CN | 112163620 | A | 01 January 2021 | None | | | |
| US | 2012084235 | A1 | 05 April 2012 | JP | 2012079286 | A | 19 April 2012 |

Form PCT/ISA/210 (patent family annex) (January 2015)

**REFERENCES CITED IN THE DESCRIPTION**

**Patent documents cited in the description**

- CN 202110602479

- CN 202110977566X